(19)

Europäisches
Patentamt

European
Patent Office

Office européen
des brevets

(11) **EP 4 614 845 A1**

(12) **EUROPEAN PATENT APPLICATION**
published in accordance with Art. 153(4) EPC

(43) Date of publication:
**10.09.2025 Bulletin 2025/37**

(21) Application number: **22964539.5**

(22) Date of filing: **02.11.2022**

(51) International Patent Classification (IPC):
*H04L 1/00* (2006.01)          *G06N 3/04* (2023.01)
*H04W 24/08* (2009.01)       *H04W 24/10* (2009.01)

(52) Cooperative Patent Classification (CPC):
**G06N 3/04; H04L 1/00; H04W 24/08; H04W 24/10**

(86) International application number:
**PCT/KR2022/017014**

(87) International publication number:
**WO 2024/096160 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **LG Electronics Inc.
Yeongdeungpo-gu
Seoul 07336 (KR)**

(72) Inventors:
• **JO, Minseok
Seoul 06772 (KR)**

• **KIM, Yeongjun
Seoul 06772 (KR)**
• **LEE, Sangrim
Seoul 06772 (KR)**
• **LEE, Kyungho
Seoul 06772 (KR)**
• **KIM, Bonghoe
Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **DEVICE AND METHOD FOR PERFORMING ONLINE LEARNING SUPPORTING VARIABLE RATES FOR CHANNEL STATE INFORMATION IN WIRELESS COMMUNICATION SYSTEM**

(57)   The purpose of the present invention is to perform online learning supporting variable rates for channel state information in a wireless communication system. An operation method of user equipment (UE) may comprise the steps of: receiving configuration information related to a channel state information (CSI) feedback; receiving reference signals on the basis of the configuration information; generating CSI feedback information on the basis of the reference signals; transmitting the CSI feedback information; and receiving information for determining the gradient of loss for recovered channel information in a base station for each of at least one CSI value included in the CSI feedback information.

## FIG. 28b

**Description**

**TECHNICAL FIELD**

The following description relates to a wireless communication system, including a method for performing online learning to support variable rates for channel state information in the wireless communication system and a device supporting the same.

**BACKGROUND ART**

Radio access systems have come into widespread in order to provide various types of communication services such as voice or data. In general, a radio access system is a multiple access system capable of supporting communication with multiple users by sharing available system resources (bandwidth, transmit power, etc.). Examples of the multiple access system include a code division multiple access (CDMA) system, a frequency division multiple access (FDMA) system, a time division multiple access (TDMA) system, a single carrier-frequency division multiple access (SC-FDMA) system, etc.

In particular, as many communication apparatuses require a large communication capacity, an enhanced mobile broadband (eMBB) communication technology has been proposed compared to radio access technology (RAT). In addition, not only massive machine type communications (MTC) for providing various services anytime anywhere by connecting a plurality of apparatuses and things but also communication systems considering services/user equipments (UEs) sensitive to reliability and latency have been proposed. To this end, various technical configurations have been proposed.

**DISCLOSURE**

**TECHNICAL PROBLEM**

The present disclosure may provide a method for effectively feeding back channel state information (CSI) in a wireless communication system and a device supporting the same.

The present disclosure may provide a method for adaptively adjusting a feedback rate of CSI in a wireless communication system and a device supporting the same.

The present disclosure may provide a method for generating a set of CSI values that can reconstruct channel information by using part or all of the CSI values in a wireless communication system and a device supporting the same.

The present disclosure may provide a method for generating a number of CSI values corresponding to a given feedback rate in a wireless communication system and a device supporting the same.

The present disclosure may provide a method for extracting additional CSI value(s) from an encoder neural network in a wireless communication system and a device supporting the same.

The present disclosure may provide a method for extracting additional CSI value(s) from a hidden layer of an encoder neural network in a wireless communication system and a device supporting the same.

The present disclosure may provide a method for extracting an accumulable feature value prior to the termination of skip connection of an encoder neural network in a wireless communication system and a device supporting the same.

The present disclosure may provide a method for obtaining channel information using a number of CSI values corresponding to a given feedback transmission rate in a wireless communication system and a device supporting the same.

The present disclosure may provide a method for determining channel information based on CSI values in a wireless communication system and a device supporting the same.

The present disclosure may provide a method for generating an input value of a decoder neural network by combining CSI values in a wireless communication system and a device supporting the same.

The present disclosure may provide a method for generating an input value of a decoder neural network through an arithmetic operation on CSI values in a wireless communication system and a device supporting the same.

The technical objects to be achieved in the present disclosure are not limited to the above-mentioned technical objects, and other technical objects that are not mentioned may be considered by those skilled in the art through the embodiments described below.

**TECHNICAL SOLUTION**

As an embodiment of the present disclosure, provided is a method performed by a user equipment (UE) in a wireless communication system, the method comprising: receiving configuration information related to channel state information (CSI) feedback; receiving reference signals based on the configuration information; generating CSI feedback information based on the reference signals; transmitting the CSI feedback information; and receiving information for determining a gradient of loss for reconstructed channel information in a base station for each of at least one CSI value included in the CSI feedback information.

As an embodiment of the present disclosure, provided is a method performed by a base station in a wireless communication system, the method comprising: transmitting configuration information related to channel state information (CSI) feedback; transmitting reference signals based on the configuration information; receiving CSI feedback information corresponding to the reference signals; reconstructing channel information based on the CSI feedback information; and transmitting information for determining a gradient of loss for reconstructed channel information in the base station for each of at least one CSI value included in the CSI feedback information.

As an embodiment of the present disclosure, provided is a user equipment (UE) in a wireless communication system, comprising: a transceiver; and a processor connected to the transceiver, wherein the processor is configured to: receive configuration information related to channel state information (CSI) feedback; receive reference signals based on the configuration information; generate CSI feedback information based on the reference signals; transmit the CSI feedback information; and receive information for determining a gradient of loss for reconstructed channel information in a base station for each of at least one CSI value included in the CSI feedback information.

As an embodiment of the present disclosure, provided is a base station in a wireless communication system, comprising: a transceiver; and a processor connected to the transceiver, wherein the processor is configured to: transmit configuration information related to channel state information (CSI) feedback; transmit reference signals based on the configuration information; receive CSI feedback information corresponding to the reference signals; reconstruct channel information based on the CSI feedback information; and transmit information for determining a gradient of loss for reconstructed channel information in the base station for each of at least one CSI value included in the CSI feedback information.

As an embodiment of the present disclosure, provided is a communication device comprising: at least one processor; at least one computer memory connected to the at least one processor and storing instructions for instructing operations when executed by the at least one processor, wherein the operations comprise: receiving configuration information related to channel state information (CSI) feedback; receiving reference signals based on the configuration information; generating CSI feedback information based on the reference signals; transmitting the CSI feedback information; and receiving information for determining a gradient of loss for reconstructed channel information in a base station for each of at least one CSI value included in the CSI feedback information.

As an embodiment of the present disclosure, provided is a non-transitory computer-readable medium storing at least one instruction, comprising: the at least one instruction executable by a processor, wherein the at least one instruction controls a device to: receive configuration information related to channel state information (CSI) feedback; receive reference signals based on the configuration information; generate CSI feedback information based on the reference signals; transmit the CSI feedback information; and receive information for determining a gradient of loss for reconstructed channel information in a base station for each of at least one CSI value included in the CSI feedback information.

The above-described aspects of the present disclosure are merely some of the preferred embodiments of the present disclosure, and various embodiments reflecting the technical features of the present disclosure may be derived and understood by those of ordinary skill in the art based on the following detailed description of the disclosure.

## ADVANTAGEOUS EFFECTS

As is apparent from the above description, the embodiments of the present disclosure have the following effects.

Based on the present disclosure, it is possible to adaptively adjust a feedback transmission rate for channel state information to a channel environment.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

## BRIEF DESCRIPTION OF THE DRAWINGS

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.

FIG. 1 shows an example of a communication system applicable to the present disclosure.

FIG. 2 shows an example of a wireless device applicable to the present disclosure.

FIG. 3 shows another example of a wireless device applicable to the present disclosure.

FIG. 4 shows an example of a hand-held device applicable to the present disclosure.

FIG. 5 shows an example of a car or an autonomous driving car applicable to the present disclosure.

FIG. 6 shows an example of artificial intelligence (AI) device applicable to the present disclosure.

FIG. 7 shows a method of processing a transmitted signal applicable to the present disclosure.

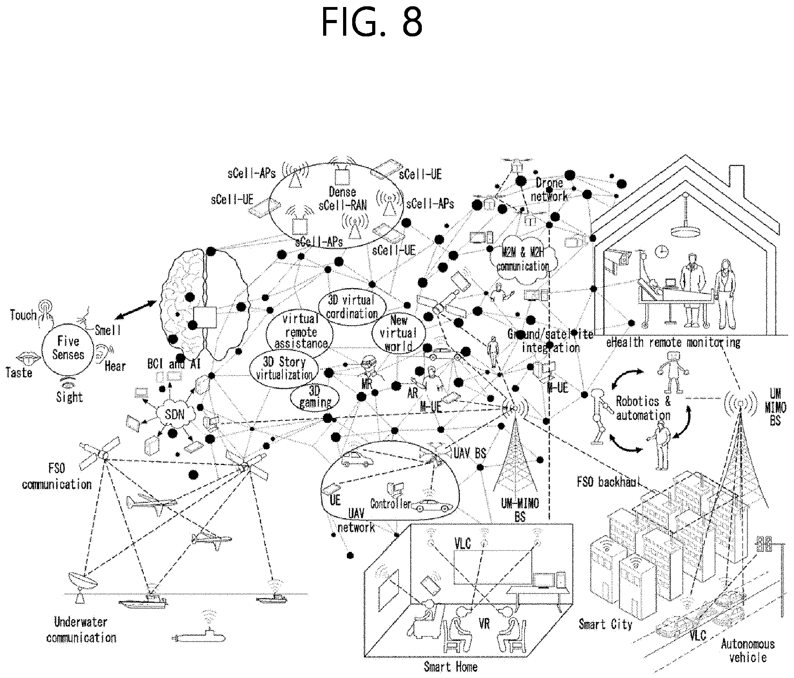

FIG. 8 shows an example of a communication structure providable in a 6th generation (6G) system applicable to the present disclosure.

FIG. 9 shows an electromagnetic spectrum applicable to the present disclosure.

FIG. 10 shows a THz communication method applicable to the present disclosure.

FIG. 11 shows a perceptron architecture in an artificial neural network applicable to the present disclosure.

FIG. 12 shows an artificial neural network architecture applicable to the present disclosure.

FIG. 13 shows a deep neural network applicable to the present disclosure.

FIG. 14 shows a convolutional neural network applicable to the present disclosure.

FIG. 15 shows a filter operation of a convolutional neural network applicable to the present disclosure.

FIG. 16 shows a neural network architecture with a recurrent loop applicable to the present disclosure.

FIG. 17 shows an operational structure of a recurrent neural network applicable to the present disclosure.

FIG. 18 shows an example of a neural network architecture for channel state information (CSI) feedback.

FIG. 19 shows an example of a processing process of a CSI matrix in a neural network for channel state information feedback.

FIG. 20 shows an example of a structure of an encoder and a decoder for CSI feedback.

FIG. 21 shows a concept of CSI feedback supporting a variable feedback transmission rate based on an embodiment of the present disclosure.

FIG. 22 shows a concept of feature extraction before skip connection to support a variable feedback transmission rate based on an embodiment of the present disclosure.

FIG. 23 shows an example of an encoder neural network supporting a variable feedback transmission rate based on an embodiment of the present disclosure.

FIG. 24 shows an example of reconstructed channel information according to a change in feedback transmission rate based on an embodiment of the present disclosure.

FIG. 25 shows an example of weights for a weighted sum of feedback signals based on an embodiment of the present disclosure.

FIG. 26 shows an example of a training method for a neural network based on an embodiment of the present disclosure.

FIGs. 27a to 27c show examples of cases where a computational graph varies in training a neural network based on an embodiment of the present disclosure.

FIG. 28a and FIG. 28b show examples of signaling for training a CSI network using accumulable feedback signals based on an embodiment of the present disclosure.

FIG. 29 shows an example of a procedure for performing learning for a decoder of a CSI network based on an embodiment of the present disclosure.

FIG. 30 shows an example of a procedure for processing information for training a decoder of a CSI network based on an embodiment of the present disclosure.

FIG. 31 shows an example of a procedure for performing learning for an encoder of a CSI network based on an embodiment of the present disclosure.

FIG. 32 shows an example of a procedure for processing information for training an encoder of a CSI network based on an embodiment of the present disclosure.

FIG. 33 shows an example of an online learning procedure using reconstructed channel information based on an embodiment of the present disclosure.

FIG. 34 shows an example of an online learning procedure using measured channel information based on an embodiment of the present disclosure.

FIG. 35 shows an unfolded representation of an online learning procedure based on an embodiment of the present disclosure.

## MODE FOR INVENTION

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. In this case, the term "BS" may be replaced with a fixed station, a Node B, an eNB (eNode B), a gNB (gNode B), an ng-eNB, an advanced base station (ABS), an access point, etc.

In addition, in the embodiments of the present disclosure, the term terminal may be replaced with a user equipment (UE), a mobile station (MS), a subscriber station (SS), a mobile subscriber station (MSS), a mobile terminal, an advanced mobile station (AMS), etc.

In addition, a transmitter is a fixed and/or mobile node that provides a data service or a call service and a receiver is a fixed and/or mobile node that receives a data service or a call service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 38.211, 3GPP TS 38.212, 3GPP TS 38.213, 3GPP TS 38.321 and 3GPP TS 38.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology after TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.XXX.

Communication System Applicable to the Present Disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

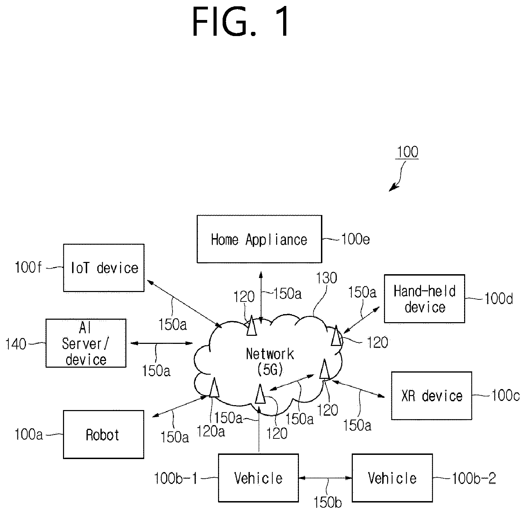

FIG. 1 shows an example of a communication system applicable to the present disclosure.

Referring to FIG. 1, the communication system 100 applicable to the present disclosure includes a wireless device, a base station and a network. The wireless device refers to a device for performing communication using radio access technology (e.g., 5G NR or LTE) and may be referred to as a communication/wireless/5G device. Without being limited thereto, the wireless device may include a robot 100 a, vehicles 100 b-1 and 100 b-2, an extended reality (XR) device 100 c, a hand-held device 100 d, a home appliance 100 e, an Internet of Thing (IoT) device 100 f, and an artificial intelligence (AI) device/server 100 g. For example, the vehicles may include a vehicle having a wireless communication function, an autonomous vehicle, a vehicle capable of performing vehicle-to-vehicle communication, etc. The vehicles 100 b-1 and 100 b-2 may include an unmanned aerial vehicle (UAV) (e.g., a drone). The XR device 100 c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100 d may include a smartphone, a smart pad, a wearable device (e.g., a smart watch or smart glasses), a computer (e.g., a laptop), etc. The home appliance 100 e may include a TV, a refrigerator, a washing machine, etc. The IoT device 100 f may include a sensor, a smart meter, etc. For example, the base station 120 and the network 130 may be implemented by a wireless device, and a specific wireless device 120 a may operate as a base station/network node for another wireless device.

The wireless devices 100 a to 100 f may be connected to the network 130 through the base station 120. AI technology is applicable to the wireless devices 100 a to 100 f, and the wireless devices 100 a to 100 f may be connected to the AI server 100 g through the network 130. The network 130 may be configured using a 3G network, a 4G (e.g., LTE) network or a 5G (e.g., NR) network, etc. The wireless devices 100 a to 100 f may communicate with each other through the base station 120/the network 130 or perform direct communication (e.g., sidelink communication) without through the base station 120/the network 130. For example, the vehicles 100 b-1 and 100 b-2 may perform direct communication (e.g., vehicle to vehicle (V2V)/vehicle to everything (V2X) communication). In addition, the IoT device 100 f (e.g., a sensor) may perform direct communication with another IoT device (e.g., a sensor) or the other wireless devices 100 a to 100 f.

Wireless communications/ connections 150 a, 150 b and 150 c may be established between the wireless devices 100 a to 100 f/the base station 120 and the base station 120/the base station 120. Here, wireless communication/connection may be established through various radio access technologies (e.g., 5G NR) such as uplink/downlink communication 150 a, sidelink communication 150 b (or D2D communication) or communication 150 c between base stations (e.g., relay, integrated access backhaul (IAB). The wireless device and the base station/wireless device or the base station and the base station may transmit/receive radio signals to/from each other through wireless communication/ connection 150 a, 150 b and 150 c. For example, wireless communication/ connection 150 a, 150 b and 150 c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.), resource allocation processes, etc. may be performed.

Communication System Applicable to the Present Disclosure

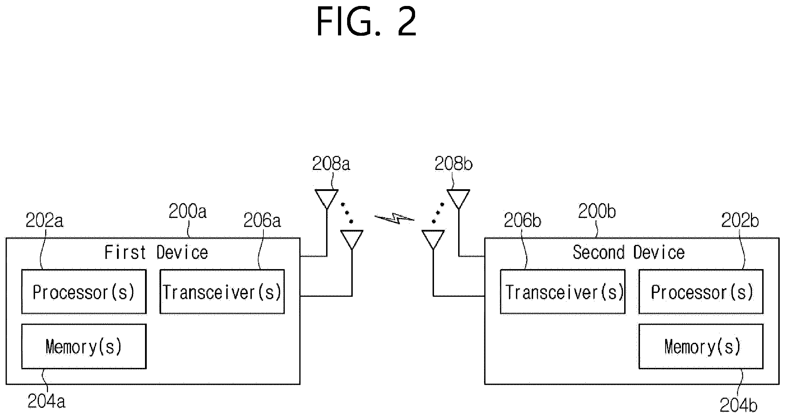

FIG. 2 shows an example of a wireless device applicable to the present disclosure.

Referring to FIG. 2, a first wireless device 200 a and a second wireless device 200 b may transmit and receive radio signals through various radio access technologies (e.g., LTE or NR). Here, (the first wireless device 200 a, the second wireless device 200 b) may correspond to (the wireless device 100 x, the base station 120) and/or (the wireless device 100 x, the wireless device 100 x) of FIG. 1.

The first wireless device 200 a may include one or more processors 202 a and one or more memories 204 a and may further include one or more transceivers 206 a and/or one or more antennas 208 a. The processor 202 a may be configured to control the memory 204 a and/or the transceiver 206 a and to implement descriptions, functions, procedures, proposals, methods and/or operational flowcharts disclosed herein. For example, the processor 202 a may process information in the memory 204 a to generate first information/signal and then transmit a radio signal including the first information/signal through the transceiver 206 a. In addition, the processor 202 a may receive a radio signal including second information/signal through the transceiver 206 a and then store information obtained from signal processing of the second information/signal in the memory 204 a. The memory 204 a may be coupled with the processor 202 a, and store a variety of information related to operation of the processor 202 a. For example, the memory 204 a may store software code including instructions for performing all or some of the processes controlled by the processor 202 a or performing the descriptions, functions, procedures, proposals, methods and/or operational flowcharts disclosed herein. Here, the processor 202 a and the memory 204 a may be part of a communication modem/circuit/chip designed to implement wireless communication technology (e.g., LTE or NR). The transceiver 206 a may be coupled with the processor 202 a to transmit and/or receive radio signals through one or more antennas 208 a. The transceiver 206 a may include a transmitter and/or a receiver. The transceiver 206 a may be used interchangeably with a radio frequency (RF) unit. In the present disclosure, the wireless device may refer to a communication modem/circuit/chip.

The second wireless device 200 b may include one or more processors 202 b and one or more memories 204 b and may further include one or more transceivers 206 b and/or one or more antennas 208 b. The processor 202 b may be configured to control the memory 204 b and/or the transceiver 206 b and to implement the descriptions, functions, procedures, proposals, methods and/or operational flowcharts disclosed herein. For example, the processor 202 b may process information in the memory 204 b to generate third information/signal and then transmit the third information/signal through the transceiver 206 b. In addition, the processor 202 b may receive a radio signal including fourth information/-signal through the transceiver 206 b and then store information obtained from signal processing of the fourth information/signal in the memory 204 b. The memory 204 b may be coupled with the processor 202 b to store a variety of information related to operation of the processor 202 b. For example, the memory 204 b may store software code including instructions for performing all or some of the processes controlled by the processor 202 b or performing the descriptions, functions, procedures, proposals, methods and/or operational flowcharts disclosed herein. Herein, the processor 202 b and the memory 204 b may be part of a communication modem/circuit/chip designed to implement wireless communication technology (e.g., LTE or NR). The transceiver 206 b may be coupled with the processor 202 b to transmit and/or receive radio signals through one or more antennas 208 b. The transceiver 206 b may include a transmitter and/or a receiver. The transceiver 206 b may be used interchangeably with a radio frequency (RF) unit. In the present disclosure, the wireless device may refer to a communication modem/circuit/chip.

Hereinafter, hardware elements of the wireless devices 200 a and 200 b will be described in greater detail. Without being limited thereto, one or more protocol layers may be implemented by one or more processors 202 a and 202 b. For example, one or more processors 202 a and 202 b may implement one or more layers (e.g., functional layers such as PHY (physical), MAC (media access control), RLC (radio link control), PDCP (packet data convergence protocol), RRC (radio resource control), SDAP (service data adaptation protocol)). One or more processors 202 a and 202 b may generate one or more protocol data units (PDUs) and/or one or more service data unit (SDU) according to the descriptions, functions, procedures, proposals, methods and/or operational flowcharts disclosed herein. One or more processors 202 a and 202 b may generate messages, control information, data or information according to the descriptions, functions, procedures, proposals, methods and/or operational flowcharts disclosed herein. One or more processors 202 a and 202 b may generate PDUs, SDUs, messages, control information, data or information according to the functions, procedures, proposals and/or methods disclosed herein and provide the PDUs, SDUs, messages, control information, data or information to one or more transceivers 206 a and 206 b. One or more processors 202 a and 202 b may receive signals (e.g., baseband signals) from one or more transceivers 206 a and 206 b and acquire PDUs, SDUs, messages, control information, data or information according to the descriptions, functions, procedures, proposals, methods and/or operational flowcharts disclosed herein.

One or more processors 202 a and 202 b may be referred to as controllers, microcontrollers, microprocessors or microcomputers. One or more processors 202 a and 202 b may be implemented by hardware, firmware, software or a combination thereof. For example, one or more application specific integrated circuits (ASICs), one or more digital signal processors (DSPs), one or more digital signal processing devices (DSPDs), programmable logic devices (PLDs) or one or more field programmable gate arrays (FPGAs) may be included in one or more processors 202 a and 202 b. The descriptions, functions, procedures, proposals, methods and/or operational flowcharts disclosed herein may be implemented using firmware or software, and firmware or software may be implemented to include modules, procedures, functions, etc. Firmware or software configured to perform the descriptions, functions, procedures, proposals, methods and/or operational flowcharts disclosed herein may be included in one or more processors 202 a and 202 b or stored in one or more memories 204 a and 204 b to be driven by one or more processors 202 a and 202 b. The descriptions, functions, procedures, proposals, methods and/or operational flowcharts disclosed herein implemented using firmware or software in the form of code, a command and/or a set of commands.

One or more memories 204 a and 204 b may be coupled with one or more processors 202 a and 202 b to store various types of data, signals, messages, information, programs, code, instructions and/or commands. One or more memories 204 a and 204 b may be composed of read only memories (ROMs), random access memories (RAMs), erasable programmable read only memories (EPROMs), flash memories, hard drives, registers, cache memories, computer-readable storage mediums and/or combinations thereof. One or more memories 204 a and 204 b may be located inside and/or outside one or more processors 202 a and 202 b. In addition, one or more memories 204 a and 204 b may be coupled with one or more processors 202 a and 202 b through various technologies such as wired or wireless connection.

One or more transceivers 206 a and 206 b may transmit user data, control information, radio signals/channels, etc. described in the methods and/or operational flowcharts of the present disclosure to one or more other apparatuses. One or more transceivers 206 a and 206 b may receive user data, control information, radio signals/channels, etc. described in the methods and/or operational flowcharts of the present disclosure from one or more other apparatuses. For example, one or more transceivers 206 a and 206 b may be coupled with one or more processors 202 a and 202 b to transmit/receive radio signals. For example, one or more processors 202 a and 202 b may perform control such that one or more transceivers 206 a and 206 b transmit user data, control information or radio signals to one or more other apparatuses. In addition, one or more processors 202 a and 202 b may perform control such that one or more transceivers 206 a and 206 b receive user data, control information or radio signals from one or more other apparatuses. In addition, one or more transceivers 206 a and 206 b may be coupled with one or more antennas 208 a and 208 b, and one or more transceivers 206 a and 206 b may be configured to transmit/receive user data, control information, radio signals/channels, etc. described in the descriptions, functions, procedures, proposals, methods and/or operational flowcharts disclosed herein through one or more antennas 208 a and 208 b. In the present disclosure, one or more antennas may be a plurality of physical antennas or a plurality of logical antennas (e.g., antenna ports). One or more transceivers 206 a and 206 b may convert the received radio signals/channels, etc. from RF band signals to baseband signals, in order to process the received user data, control information, radio signals/channels, etc. using one or more processors 202 a and 202 b. One or more transceivers 206 a and 206 b may convert the user data, control information, radio signals/channels processed using one or more processors 202 a and 202 b from baseband signals into RF band signals. To this end, one or more transceivers 206 a and 206 b may include (analog) oscillator and/or filters.

Structure of Wireless Device Applicable to the Present Disclosure

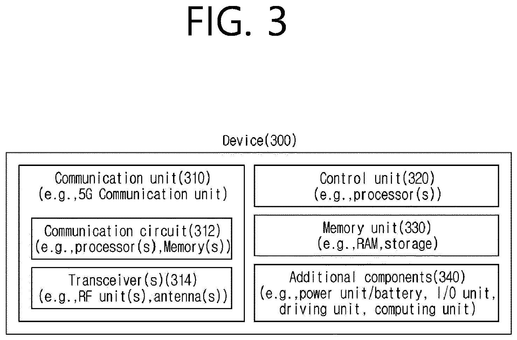

FIG. 3 shows another example of a wireless device applicable to the present disclosure.

Referring to FIG. 3, a wireless device 300 may correspond to the wireless devices 200 a and 200 b of FIG. 2 and include various elements, components, units/portions and/or modules. For example, the wireless device 300 may include a communication unit 310, a control unit (controller) 320, a memory unit (memory) 330 and additional components 340. The communication unit may include a communication circuit 312 and a transceiver(s) 314. For example, the communication circuit 312 may include one or more processors 202 a and 202 b and/or one or more memories 204 a and 204 b of FIG. 2. For example, the transceiver(s) 314 may include one or more transceivers 206 a and 206 b and/or one or more antennas 208 a and 208 b of FIG. 2. The control unit 320 may be electrically coupled with the communication unit 310, the memory unit 330 and the additional components 340 to control overall operation of the wireless device. For example, the control unit 320 may control electrical/mechanical operation of the wireless device based on a program/code/instruction/information stored in the memory unit 330. In addition, the control unit 320 may transmit the information stored in the memory unit 330 to the outside (e.g., another communication device) through the wireless/wired interface using the communication unit 310 over a wireless/wired interface or store information received from the outside (e.g., another communication device) through the wireless/wired interface using the communication unit 310 in the memory unit 330.

The additional components 340 may be variously configured according to the types of the wireless devices. For example, the additional components 340 may include at least one of a power unit/battery, an input/output unit, a driving unit or a computing unit. Without being limited thereto, the wireless device 300 may be implemented in the form of the robot (FIG. 1, 100 a), the vehicles (FIG. 1, 100 b-1 and 100 b-2), the XR device (FIG. 1, 100 c), the hand-held device (FIG. 1, 100 d), the home appliance (FIG. 1, 100 e), the IoT device (FIG. 1, 100 f), a digital broadcast terminal, a hologram apparatus, a public safety apparatus, an MTC apparatus, a medical apparatus, a Fintech device (financial device), a security device, a climate/environment device, an AI server/device (FIG. 1, 140), the base station (FIG. 1, 120), a network node, etc. The wireless device may be movable or may be used at a fixed place according to use example/service.

In FIG. 3, various elements, components, units/portions and/or modules in the wireless device 300 may be coupled with each other through wired interfaces or at least some thereof may be wirelessly coupled through the communication unit 310. For example, in the wireless device 300, the control unit 320 and the communication unit 310 may be coupled by wire, and the control unit 320 and the first unit (e.g., 130 or 140) may be wirelessly coupled through the communication unit 310. In addition, each element, component, unit/portion and/or module of the wireless device 300 may further include one or more elements. For example, the control unit 320 may be composed of a set of one or more processors. For example, the control unit 320 may be composed of a set of a communication control processor, an application processor, an electronic control unit (ECU), a graphic processing processor, a memory control processor, etc. In another example, the memory unit 330 may be composed of a random access memory (RAM), a dynamic RAM (DRAM), a read only memory (ROM), a flash memory, a volatile memory, a non-volatile memory and/or a combination thereof.

Hand-Held Device Applicable to the Present Disclosure

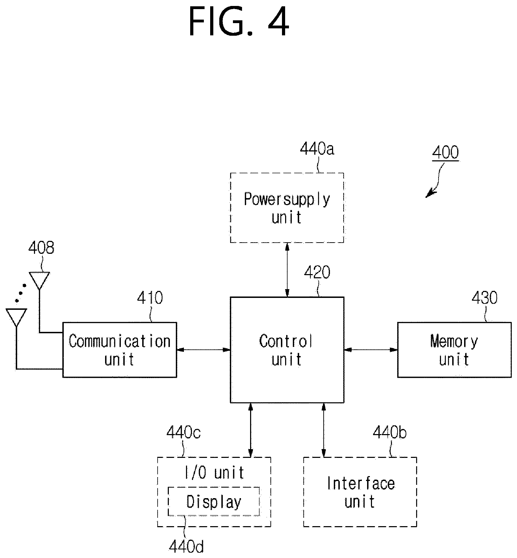

FIG. 4 shows an example of a hand-held device applicable to the present disclosure.

FIG. 4 shows a hand-held device applicable to the present disclosure. The hand-held device may include a smartphone, a smart pad, a wearable device (e.g., a smart watch or smart glasses), and a hand-held computer (e.g., a laptop, etc.). The hand-held device may be referred to as a mobile station (MS), a user terminal (UT), a mobile subscriber station (MSS), a subscriber station (SS), an advanced mobile station (AMS) or a wireless terminal (WT).

Referring to FIG. 4, the hand-held device 400 may include an antenna unit (antenna) 408, a communication unit (transceiver) 410, a control unit (controller) 420, a memory unit (memory) 430, a power supply unit (power supply) 440 a, an interface unit (interface) 440 b, and an input/output unit 440 c. An antenna unit (antenna) 408 may be part of the communication unit 410. The blocks 410 to 430/440 a to 440 c may correspond to the blocks 310 to 330/340 of FIG. 3, respectively.

The communication unit 410 may transmit and receive signals (e.g., data, control signals, etc.) to and from other wireless devices or base stations. The control unit 420 may control the components of the hand-held device 400 to perform various operations. The control unit 420 may include an application processor (AP). The memory unit 430 may store data/parameters/program/code/instructions necessary to drive the hand-held device 400. In addition, the memory unit 430 may store input/output data/information, etc. The power supply unit 440 a may supply power to the hand-held device 400 and include a wired/wireless charging circuit, a battery, etc. The interface unit 440 b may support connection between the hand-held device 400 and another external device. The interface unit 440 b may include various ports (e.g., an audio input/output port and a video input/output port) for connection with the external device. The input/output unit 440 c may receive or output video information/signals, audio information/signals, data and/or user input information. The input/output unit 440 c may include a camera, a microphone, a user input unit, a display 440 d, a speaker and/or a haptic module.

For example, in case of data communication, the input/output unit 440 c may acquire user input information/-signal (e.g., touch, text, voice, image or video) from the user and store the user input information/signal in the memory unit 430. The communication unit 410 may convert the information/signal stored in the memory into a radio signal and transmit the converted radio signal to another wireless device directly or transmit the converted radio signal to a base station. In addition, the communication unit 410 may receive a radio signal from another wireless device or the base station and then restore the received radio signal into original information/signal. The restored information/signal may be stored in the memory unit 430 and then output through the input/output unit 440 c in various forms (e.g., text, voice, image, video and haptic).

Type of Wireless Device Applicable to the Present Disclosure

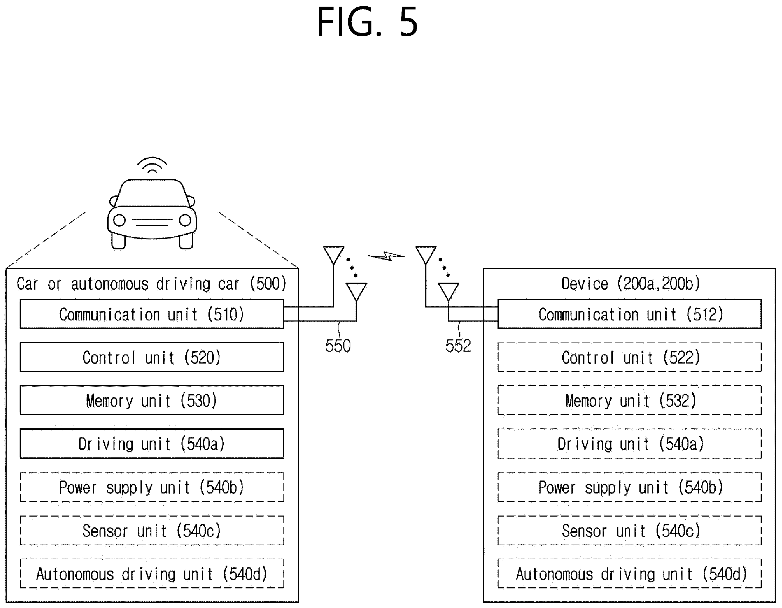

FIG. 5 shows an example of a car or an autonomous driving car applicable to the present disclosure.

FIG. 5 shows a car or an autonomous driving vehicle applicable to the present disclosure. The car or the autonomous driving car may be implemented as a mobile robot, a vehicle, a train, a manned/unmanned aerial vehicle (AV), a ship, etc. and the type of the car is not limited.

Referring to FIG. 5, the car or autonomous driving car 500 may include an antenna unit (antenna) 508, a communication unit (transceiver) 510, a control unit (controller) 520, a driving unit 540 a, a power supply unit (power supply) 540 b, a sensor unit 540 c, and an autonomous driving unit 540 d. The antenna unit 550 may be configured as part of the communication unit 510. The blocks 510/530/540 a to 540 d correspond to the blocks 410/430/440 of FIG. 4.

The communication unit 510 may transmit and receive signals (e.g., data, control signals, etc.) to and from external devices such as another vehicle, a base station (e.g., a base station, a road side unit, etc.), and a server. The control unit 520 may control the elements of the car or autonomous driving car 500 to perform various operations. The control unit 520 may include an electronic control unit (ECU).

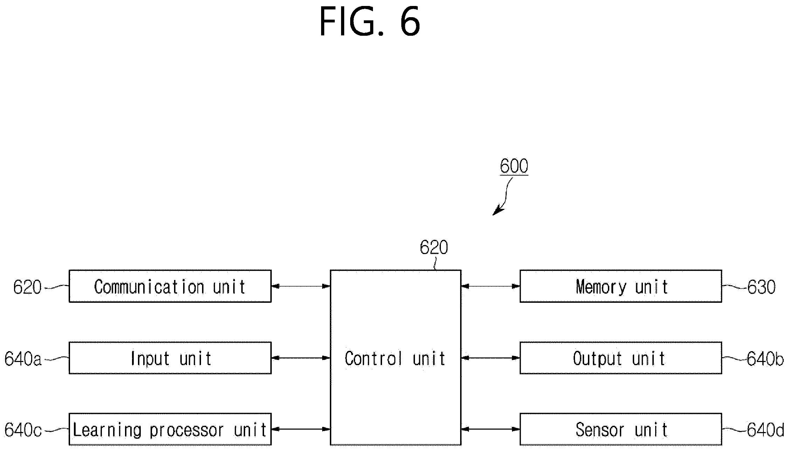

FIG. 6 shows an example of artificial intelligence (AI) device applicable to the present disclosure. For example, the AI device may be implemented as fixed or movable devices such as a TV, a projector, a smartphone, a PC, a laptop, a digital broadcast terminal, a tablet PC, a wearable device, a set-top box (STB), a radio, a washing machine, a refrigerator, a digital signage, a robot, a vehicle, or the like.

Referring to FIG. 6, the AI device 600 may include a communication unit (transceiver) 610, a control unit (controller) 620, a memory unit (memory) 630, an input/output unit 640 a/640 b, a leaning processor unit (learning processor) 640 c and a sensor unit 640 d. The blocks 610 to 630/640 a to 640 d may correspond to the blocks 310 to 330/340 of FIG. 3, respectively.

The communication unit 610 may transmit and receive wired/wireless signals (e.g., sensor information, user input, learning models, control signals, etc.) to and from external devices such as another AI device (e.g., FIG. 1, 100 x, 120 or 140) or the AI server (FIG. 1, 140) using wired/wireless communication technology. To this end, the communication unit 610 may transmit information in the memory unit 630 to an external device or transfer a signal received from the external device to the memory unit 630.

The control unit 620 may determine at least one executable operation of the AI device 600 based on information determined or generated using a data analysis algorithm or a machine learning algorithm. In addition, the control unit 620 may control the components of the AI device 600 to perform the determined operation. For example, the control unit 620 may request, search for, receive or utilize the data of the learning processor unit 640 c or the memory unit 630, and control the components of the AI device 600 to perform predicted operation or operation, which is determined to be desirable, of at least one executable operation. In addition, the control unit 620 may collect history information including operation of the AI device 600 or user's feedback on the operation and store the history information in the memory unit 630 or the learning processor unit 640 c or transmit the history information to the AI server (FIG. 1, 140). The collected history information may be used to update a learning model.

The memory unit 630 may store data supporting various functions of the AI device 600. For example, the memory unit 630 may store data obtained from the input unit 640 a, data obtained from the communication unit 610, output data of the learning processor unit 640 c, and data obtained from the sensing unit 640. In addition, the memory unit 630 may store control information and/or software code necessary to operate/execute the control unit 620.

The input unit 640 a may acquire various types of data from the outside of the AI device 600. For example, the input unit 640 a may acquire learning data for model learning, input data, to which the learning model will be applied, etc. The input unit 640 a may include a camera, a microphone and/or a user input unit. The output unit 640 b may generate video, audio or tactile output. The output unit 640 b may include a display, a speaker and/or a haptic module. The sensing unit 640 may obtain at least one of internal information of the AI device 600, the surrounding environment information of the AI device 600 and user information using various sensors. The sensing unit 640 may include a proximity sensor, an illumination sensor, an acceleration sensor, a magnetic sensor, a gyro sensor, an inertia sensor, a red green blue (RGB) sensor, an infrared (IR) sensor, a finger scan sensor, an ultrasonic sensor, an optical sensor, a microphone and/or a radar.

The learning processor unit 640 c may train a model composed of an artificial neural network using training data. The learning processor unit 640 c may perform AI processing along with the learning processor unit of the AI server (FIG. 1, 140). The learning processor unit 640 c may process information received from an external device through the communication unit 610 and/or information stored in the memory unit 630. In addition, the output value of the learning processor unit 640 c may be transmitted to the external device through the communication unit 610 and/or stored in the memory unit 630.

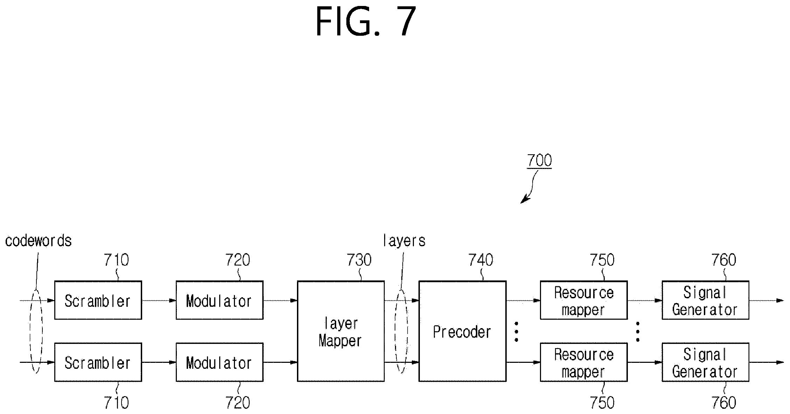

FIG. 7 shows a method of processing a transmitted signal applicable to the present disclosure. For example, the transmitted signal may be processed by a signal processing circuit. At this time, a signal processing circuit 700 may include a scrambler 710, a modulator 720, a layer mapper 730, a precoder 740, a resource mapper 750, and a signal generator 760. At this time, for example, the operation/function of FIG. 7 may be performed by the processors 202 a and 202 b and/or the transceiver 206 a and 206 b of FIG. 2. In addition, for example, the hardware element of FIG. 7 may be implemented in the processors 202 a and 202 b of FIG. 2 and/or the transceivers 206 a and 206 b of FIG. 2. For example, blocks 710 to 760 may be implemented in the processors 202 a and 202 b of FIG. 2. In addition, blocks 710 to 750 may be implemented in the processors 202 a and 202 b of FIG. 2 and a block 760 may be implemented in the transceivers 206 a and 206 b of FIG. 2, without being limited to the above-described embodiments.

A codeword may be converted into a radio signal through the signal processing circuit 700 of FIG. 7. Here, the codeword is a coded bit sequence of an information block. The information block may include a transport block (e.g., a UL-SCH transport block or a DL-SCH transport block). The radio signal may be transmitted through various physical channels (e.g., a PUSCH and a PDSCH). Specifically, the codeword may be converted into a bit sequence scrambled by the scrambler 710. The scramble sequence used for scramble is generated based in an initial value and the initial value may include ID information of a wireless device, etc. The scrambled bit sequence may be modulated into a modulated symbol sequence by the modulator 720. The modulation method may include pi/2-binary phase shift keying (pi/2-BPSK), m-phase shift keying (m-PSK), m-quadrature amplitude modulation (m-QAM), etc.

A complex modulation symbol sequence may be mapped to one or more transport layer by the layer mapper 730. Modulation symbols of each transport layer may be mapped to corresponding antenna port(s) by the precoder 740 (precoding). The output z of the precoder 740 may be obtained by multiplying the output y of the layer mapper 730 by an N*M precoding matrix W. Here, N may be the number of antenna ports and M may be the number of transport layers. Here, the precoder 740 may perform precoding after transform precoding (e.g., discrete Fourier transform (DFT)) for complex modulation symbols. In addition, the precoder 740 may perform precoding without performing transform precoding.

The resource mapper 750 may map modulation symbols of each antenna port to time-frequency resources. The time-frequency resources may include a plurality of symbols (e.g., a CP-OFDMA symbol and a DFT-s-OFDMA symbol) in the time domain and include a plurality of subcarriers in the frequency domain. The signal generator 760 may generate a radio signal from the mapped modulation symbols, and the generated radio signal may be transmitted to another device through each antenna. To this end, the signal generator 760 may include an inverse fast Fourier transform (IFFT) module, a cyclic prefix (CP) insertor, a digital-to-analog converter (DAC), a frequency uplink converter, etc.

A signal processing procedure for a received signal in the wireless device may be configured as the inverse of the signal processing procedures 710 to 760 of FIG. 7. For example, the wireless device (e.g., 200 a or 200 b of FIG. 2) may receive a radio signal from the outside through an antenna port/transceiver. The received radio signal may be converted into a baseband signal through a signal restorer. To this end, the signal restorer may include a frequency downlink converter, an analog-to-digital converter (ADC), a CP remover, and a fast Fourier transform (FFT) module. Thereafter, the baseband signal may be restored to a codeword through a resource de-mapper process, a postcoding process, a demodulation process and a descrambling process. The codeword may be restored to an original information block through decoding. Accordingly, a signal processing circuit (not shown) for a received signal may include a signal restorer, a resource de-mapper, a postcoder, a demodulator, a de-scrambler and a decoder.

6G Communication System

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 1 below. That is, Table 1 shows the requirements of the 6G system.

[Table 1]

| Per device peak data rate | 1 Tbps |
| --- | --- |
| E2E latency | 1 ms |
| Maximum spectral efficiency | 100 bps/Hz |
| Mobility support | Up to 1000 km/hr |
| Satellite integration | Fully |
| AI | Fully |
| Autonomous vehicle | Fully |
| XR | Fully |
| Haptic Communication | Fully |

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

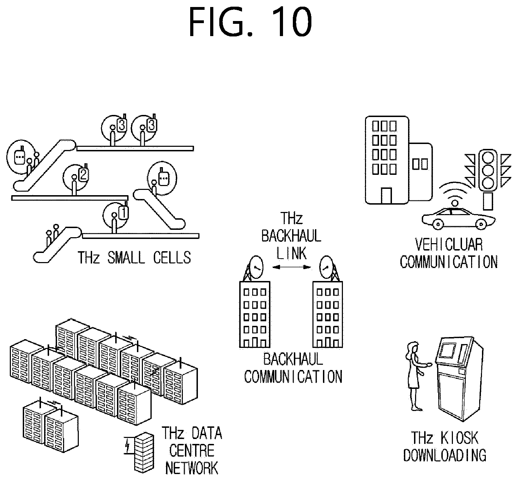

FIG. 10 shows an example of a communication structure providable in a 6G system applicable to the present disclosure.

Referring to FIG. 10, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system.

Core Implementation Technology of 6G System

- Artificial Intelligence (AI)

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field. However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel measurement and channel tracking and may be used for power allocation, interference cancellation, etc. in the physical layer of DL. In addition, machine learning may be used for antenna selection, power control, symbol detection, etc. in the MIMO system.

However, application of a deep neutral network (DNN) for transmission in the physical layer may have the following problems.

Deep learning-based AI algorithms require a lot of training data in order to optimize training parameters. However, due to limitations in acquiring data in a specific channel environment as training data, a lot of training data is used offline. Static training for training data in a specific channel environment may cause a contradiction between the diversity and dynamic characteristics of a radio channel.

In addition, currently, deep learning mainly targets real signals. However, the signals of the physical layer of wireless communication are complex signals. For matching of the characteristics of a wireless communication signal, studies on a neural network for detecting a complex domain signal are further required.

Hereinafter, machine learning will be described in greater detail.

Machine learning refers to a series of operations to train a machine in order to build a machine which can perform tasks which cannot be performed or are difficult to be performed by people. Machine learning requires data and learning models. In machine learning, data learning methods may be roughly divided into three methods, that is, supervised learning, unsupervised learning and reinforcement learning.

Neural network learning is to minimize output error. Neural network learning refers to a process of repeatedly inputting training data to a neural network, calculating the error of the output and target of the neural network for the training data, backpropagating the error of the neural network from the output layer of the neural network to an input layer in order to reduce the error and updating the weight of each node of the neural network.

Supervised learning may use training data labeled with a correct answer and the unsupervised learning may use training data which is not labeled with a correct answer. That is, for example, in case of supervised learning for data classification, training data may be labeled with a category. The labeled training data may be input to the neural network, and the output (category) of the neural network may be compared with the label of the training data, thereby calculating the error. The calculated error is backpropagated from the neural network backward (that is, from the output layer to the input layer), and the connection weight of each node of each layer of the neural network may be updated according to backpropagation. Change in updated connection weight of each node may be determined according to the learning rate. Calculation of the neural network for input data and backpropagation of the error may configure a learning cycle (epoch). The learning data is differently applicable according to the number of repetitions of the learning cycle of the neural network. For example, in the early phase of learning of the neural network, a high learning rate may be used to increase efficiency such that the neural network rapidly ensures a certain level of performance and, in the late phase of learning, a low learning rate may be used to increase accuracy.

The learning method may vary according to the feature of data. For example, for the purpose of accurately predicting data transmitted from a transmitter in a receiver in a communication system, learning may be performed using supervised learning rather than unsupervised learning or reinforcement learning.

The learning model corresponds to the human brain and may be regarded as the most basic linear model. However, a paradigm of machine learning using a neural network structure having high complexity, such as artificial neural networks, as a learning model is referred to as deep learning.

Neural network cores used as a learning method may roughly include a deep neural network (DNN) method, a convolutional deep neural network (CNN) method and a recurrent Boltzmman machine (RNN) method. Such a learning model is applicable.

Terahertz (THz) Communication

THz communication is applicable to the 6G system. For example, a data rate may increase by increasing bandwidth. This may be performed by using sub-THz communication with wide bandwidth and applying advanced massive MIMO technology.

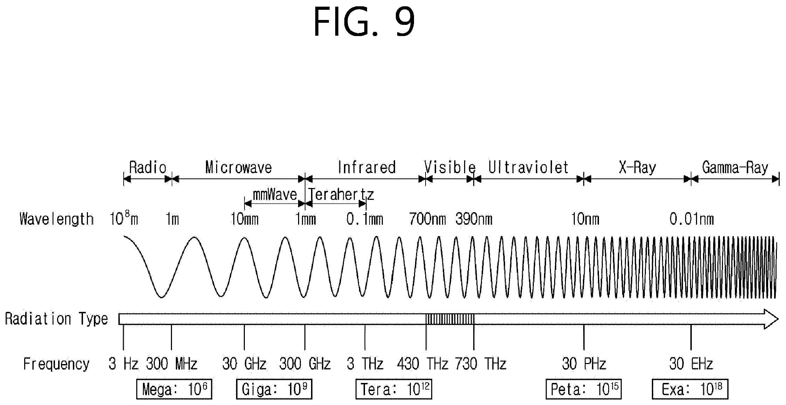

FIG. 9 shows an electromagnetic spectrum applicable to the present disclosure. For example, referring to FIG. 9, THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

The main characteristics of THz communication include (i) bandwidth widely available to support a very high data rate and (ii) high path loss occurring at a high frequency (a high directional antenna is indispensable). A narrow beam width generated by the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

THz Wireless Communication

FIG. 10 shows a THz communication method applicable to the present disclosure.

Referring to FIG. 10, THz wireless communication uses a THz wave having a frequency of approximately 0.1 to 10 THz (1 THz=1012 Hz), and may mean terahertz (THz) band wireless communication using a very high carrier frequency of 100 GHz or more. The THz wave is located between radio frequency (RF)/millimeter (mm) and infrared bands, and (i) transmits non-metallic/non-polarizable materials better than visible/infrared rays and has a shorter wavelength than the RF/millimeter wave and thus high straightness and is capable of beam convergence.

Artificial Intelligence System

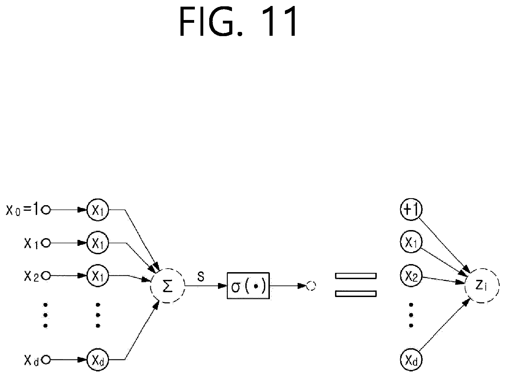

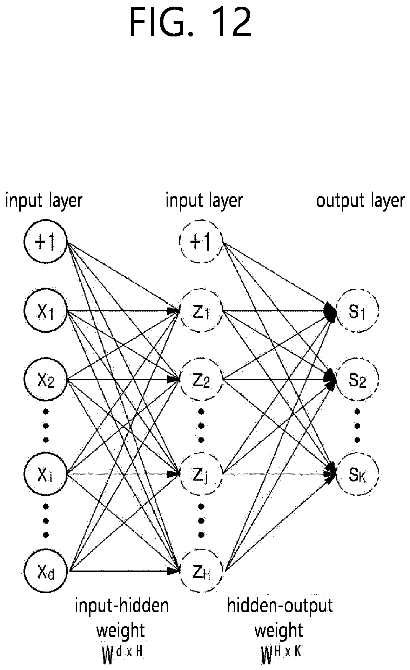

FIG. 11 shows a perceptron architecture in an artificial neural network applicable to the present disclosure. In addition, FIG. 12 shows an artificial neural network architecture applicable to the present disclosure.

As described above, an artificial intelligence system may be applied to a 6G system. Herein, as an example, the artificial intelligence system may operate based on a learning model corresponding to the human brain, as described above. Herein, a paradigm of machine learning, which uses a neural network architecture with high complexity like artificial neural network, may be referred to as deep learning. In addition, neural network cores, which are used as a learning scheme, are mainly a deep neural network (DNN), a convolutional deep neural network (CNN), and a recurrent neural network (RNN). Herein, as an example referring to FIG. 11, an artificial neural network may consist of a plurality of perceptrons. Herein, when an input vector x={$x_1$, $x_2$, ..., $x_d$} is input, each component is multiplied by a weight {$W_1$, $W_2$, ..., Wd}, results are all added up, and then an activation function $\sigma(\cdot)$ is applied, of which the overall process may be referred to as a perceptron. For a large artificial neural network architecture, when expanding the simplified perceptron structure illustrated in FIG. 11, an input may be applied to different multidimensional perceptrons. For convenience of explanation, an input value or an output value will be referred to as a node.

Meanwhile, the perceptron structure shown in FIG. 11 may be described to consist of a total of 3 layers based on an input value and an output value. An artificial neural network, which has H (d+1)-dimensional perceptrons between the 1st layer and the 2nd layer and K (H+1)-dimensional perceptrons between the 2nd layer and the 3rd layer, may be expressed as in FIG. 12.

Herein, a layer, in which an input vector is located, is referred to as an input layer, a layer, in which a final output value is located, is referred to as an output layer, and all the layers between the input layer and the output layer are referred to as hidden layers. As an example, 3 layers are disclosed in FIG. 12, but since an input layer is excluding in counting the number of actual artificial neural network layers, it can be understood that the artificial neural network shown in FIG. 12 has a total of 2 layers. An artificial neural network is constructed by connecting perceptrons of a basic block two-dimensionally.

The above-described input layer, hidden layer and output layer are commonly applicable not only to multilayer perceptrons but also to various artificial neural network architectures like CNN and RNN, which will be described below. As there are more hidden layers, an artificial neural network becomes deeper, and a machine learning paradigm using a sufficiently deep artificial neural network as a learning model may be referred to as deep learning. In addition, an artificial neural network used for deep learning may be referred to as a deep neural network (DNN).

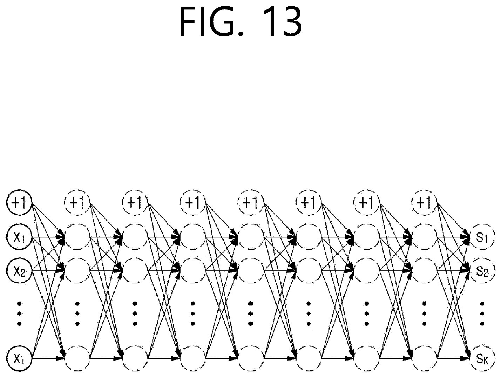

FIG. 13 shows a deep neural network applicable to the present disclosure.

Referring to FIG. 13, a deep neural network may be a multilayer perceptron consisting of 8 layers (hidden layers+output layer). Herein, the multilayer perceptron structure may be expressed as a fully-connected neural network. In a fully-connected neural network, there may be no connection between nodes in a same layer and only nodes located in neighboring layers may be connected with each other. A DNN has a fully-connected neural network structure combining a plurality of hidden layers and activation functions so that it may be effectively applied for identifying a correlation characteristic between an input and an output. Herein, the correlation characteristic may mean a joint probability between the input and the output.

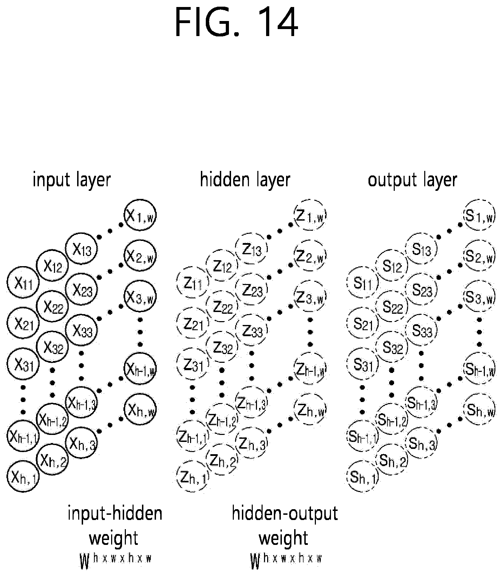

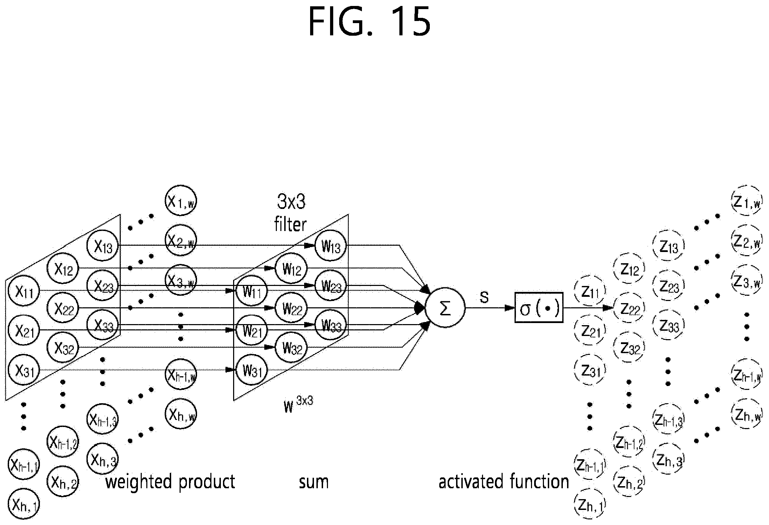

FIG. 14 shows a convolutional neural network applicable to the present disclosure. In addition, FIG. 15 shows a filter operation of a convolutional neural network applicable to the present disclosure.

As an example, depending on how to connect a plurality of perceptrons, it is possible to form various artificial neural network structures different from the above-described DNN. Herein, in the DNN, nodes located in a single layer are arranged in a one-dimensional vertical direction. However, referring to FIG. 14, it is possible to assume a two-dimensional array of w horizontal nodes and h vertical nodes (the convolutional neural network structures of FIG. 14). In this case, since a weight is applied to each connection in a process of connecting one input node to a hidden layer, a total of $h \times w$ weights should be considered. As there are $h \times w$ nodes in an input layer, a total of $h^2 w^2$ weights may be needed between two neighboring layers.

Furthermore, as the convolutional neural network of FIG. 14 has the problem of exponential increase in the number of weights according to the number of connections, the presence of a small filter may be assumed instead of considering every mode of connections between neighboring layers. As an example, as shown in FIG. 15, weighted summation and activation function operation may be enabled for a portion overlapped by a filter.

At this time, one filter has a weight corresponding to a number as large as its size, and learning of a weight may be performed to extract and output a specific feature on an image as a factor. In FIG. 15, a $3 \times 3$ filter may be applied to a top rightmost $3 \times 3$ area of an input layer, and an output value, which is a result of the weighted summation and activation function operation for a corresponding node, may be stored at $z_{22}$.

Herein, as the above-described filter scans the input layer while moving at a predetermined interval horizontally and vertically, a corresponding output value may be put a position of a current filter. Since a computation method is similar to a convolution computation for an image in the field of computer vision, such a structure of deep neural network may be referred to as a convolutional neural network (CNN), and a hidden layer created as a result of convolution computation may be referred to as a convolutional layer. In addition, a neural network with a plurality of convolutional layers may be referred to as a deep convolutional neural network (DCNN).

In addition, at a node in which a current filter is located in a convolutional layer, a weighted sum is calculated by including only a node in an area covered by the filter and thus the number of weights may be reduced. Accordingly, one filter may be so used as to focus on a feature of a local area. Thus, a CNN may be effectively applied to image data processing for which a physical distance in a two-dimensional area is a crucial criterion of determination. Meanwhile, a CNN may apply a plurality of filters immediately before a convolutional layer and create a plurality of output results through a convolution computation of each filter.

Meanwhile, depending on data properties, there may be data of which a sequence feature is important. A recurrent neural network structure may be a structure obtained by applying a scheme, in which elements in a data sequence are input one by one at each timestep by considering the distance variability and order of such sequence datasets and an output vector (hidden vector) output at a specific timestep is input with a very next element in the sequence, to an artificial neural network.

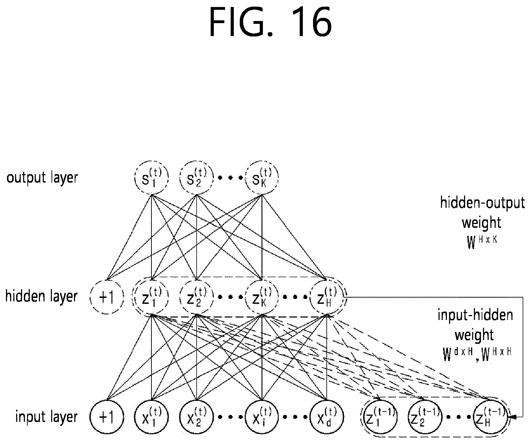

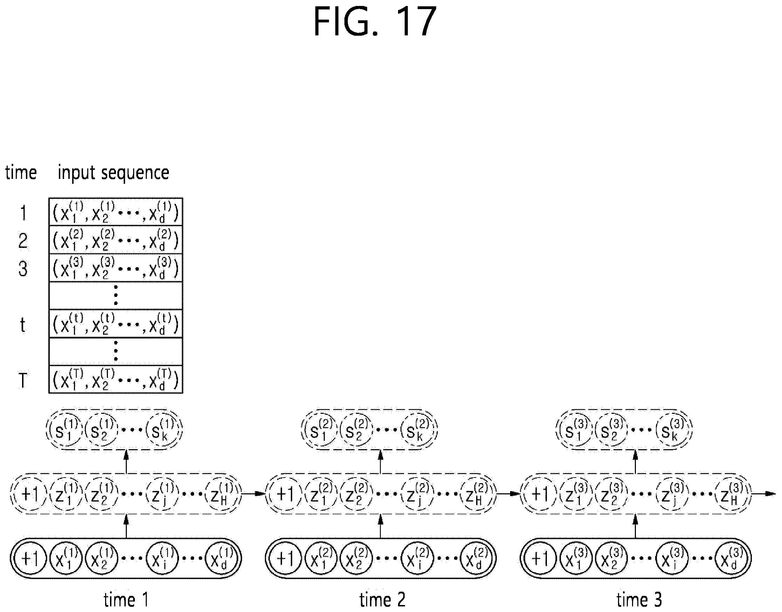

FIG. 16 shows a neural network architecture with a recurrent loop applicable to the present disclosure. FIG. 17 shows an operational structure of a recurrent neural network applicable to the present disclosure.

Referring to FIG. 16, a recurrent neural network (RNN) may have a structure which applies a weighted sum and an activation function by inputting hidden vectors $\{z_1^{(t-1)}, z_2^{(t-1)}, ..., z_H^{(t-1)}\}$ of an immediately previous timestep t-1 during a process of inputting elements $\{x_1^{(t)}, x_2^{(t)}, ..., x_d^{(t)}\}$ of a timestep t in a data sequence into a fully connected neural network. The reason why such hidden vectors are forwarded to a next timestep is because information in input vectors at previous timesteps is considered to have been accumulated in a hidden vector of a current timestep.

In addition, referring to FIG. 17, a recurrent neural network may operate in a predetermined timestep order for an input data sequence. Herein, as a hidden vector $\{z_1^{(1)}, z_2^{(1)}, ..., z_H^{(1)}\}$ at a time of inputting an input vector $\{x_1^{(t)}, x_2^{(t)}, ..., x_d^{(t)}\}$ of timestep 1 into a recurrent neural network is input together with an input vector $\{x_1^{(2)}, x_2^{(2)}, ..., x_d^{(2)}\}$ of timestep 2, a vector $\{z_1^{(2)}, z_2^{(2)}, ..., z_H^{(2)}\}$ of a hidden layer is determined through a weighted sum and an activation function. Such a process is iteratively performed at timestep 2, timestep 3 and until timestep T.

Meanwhile, when a plurality of hidden layers are allocated in a recurrent neural network, this is referred to as a deep recurrent neural network (DRNN). A recurrent neural network is so designed as to effectively apply to sequence data (e.g., natural language processing).

Apart from DNN, CNN and RNN, other neural network cores used as a learning scheme include various deep learning techniques like restricted Boltzmann machine (RBM), deep belief networks (DBN) and deep Q-Network, and these may be applied to such areas as computer vision, voice recognition, natural language processing, and voice/signal processing.

Recently, there are attempts to integrate AI with a wireless communication system, but these are concentrated in an application layer and a network layer and, especially in the case of deep learning, in a wireless resource management and allocation filed. Nevertheless, such a study gradually evolves to a MAC layer and a physical layer, and there are attempts to combine deep learning and wireless transmission especially in a physical layer. As for a fundamental signal processing and communication mechanism, AI-based physical layer transmission means application of a signal processing and communication mechanism based on an AI driver, instead of a traditional communication framework. For example, it may include deep learning-based channel coding and decoding, deep learning-based signal estimation and detection, deep learning-based MIMO mechanism, and AI-based resource scheduling and allocation.

Specific Embodiments of the Present Disclosure

The present disclosure relates to a technology for channel state information (CSI) feedback at a variable rate in a wireless communication system. Specifically, the present disclosure relates to a method for performing training on an artificial intelligence model to variably operate the rate of CSI feedback information, in a structure that generates and interprets the CSI feedback information based on the artificial intelligence model, and a device supporting the same.

In the present disclosure, a lower-case or upper-case italic letter represents a scalar. A lower-case bold-face letter and an upper-case bold-face letter represent a vector and a matrix, respectively. A calligraphic letter represents a set. For example, x, x, X, and $\mathbb{X}$ represent a scalar, a vector, a matrix, and a set. $\mathbb{C}$ represents a complex set, and $\mathbb{C}^{m \times n}$ represents an m×n dimensional complex space. Superscript$(\cdot)^H$ represents a Hermitian transpose. $\mathrm{Tr}(\cdot)$ and $\mathbb{E}[\cdot]$ represent trace and expectation operator, respectively. $\| \cdot \|_2$ represents Euclidean norm of a vector. For any set $\mathbb{X}$ and $\mathbb{Y}$, $\mathbb{X} \times \mathbb{Y}$ represents Cartesian product of sets $\mathbb{X}$ and $\mathbb{Y}$, and $\mathbb{X}^n$ represents n-ary Cartesian power of set $\mathbb{X}$. In the present disclosure, signals expressed as a gradient vector may be a row vector, not a column vector. Therefore, the following gradient vector can be understood as a signal having the Hermitian transpose or transpose relationship with the gradient vector of a conventional expression, but in the present disclosure, all are commonly referred to as gradient vectors.

In this disclosure, an artificial neural network that compresses and reconstructs CSI based on deep learning (DL) is referred to as a 'CSI network'. Recently, various evolutions have been made in the architecture of the CSI network.

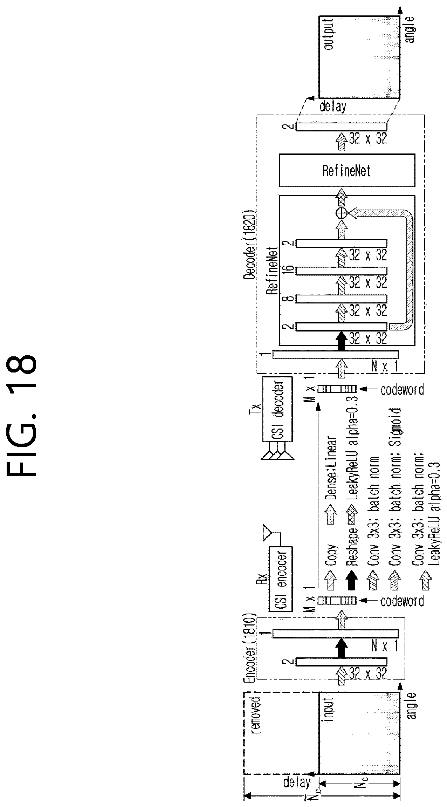

FIG. 18 shows an example of a neural network architecture for CSI feedback. FIG. 18 shows CsiNet, which is an example of a CSI network architecture. Referring to FIG. 18, the CSI network may consist of a CSI encoder (1810) and a CSI decoder (1820). For example, in the case of downlink in which data transmission is performed from a base station to a UE, the base station may operate as a transmitter and the UE may operate as a receiver. In downlink, the CSI encoder may be operated by the UE, which is a receiver, and the CSI decoder may be operated by the base station, which is a transmitter. In the present disclosure, for the convenience of explanation, the case of downlink communication is assumed, but the various embodiments described below are not limited to downlink, and can be applied to other links such as uplink and sidelink.

The CSI encoder included in the UE may compress information for a channel state. The compressed information, which is the output of the CSI encoder, is transmitted to the base station through uplink feedback. The base station inputs the received compressed information into the CSI decoder, and the CSI decoder may reconstruct information for the channel state of the UE. In the present disclosure, for the convenience of explanation, the compressed information, which is the output of the CSI encoder and the input of the CSI decoder, may be referred to as a CSI feedback signal, CSI feedback information, or other terms having an equivalent technical meaning therefor. In the present disclosure, the CSI feedback signal may have a form of a bit stream. Herein, the bit string means a sequence of binary digits or bits of 0 or 1, not a vector of floating point numbers.

In the present disclosure, it is assumed that the number of transmit antennas of the base station is $N_t$, and the number of receive antennas of the UE is 1. However, the various embodiments described below are not only applicable to a single receive antenna, and can be extended to a multi-antenna case. In addition, in the following description, an OFDM system using $N_c$ orthogonal subcarriers is considered.

A signal received by the UE through the n-th subcarrier may be expressed as in [Equation 1] below.

[Equation 1]

$$y_n = \mathbf{h}_n^H \mathbf{v}_n x_n + z_n, \qquad (n = 1, 2, \ldots, N_c)$$

In [Equation 1], $\mathbf{h}_n \in \mathbb{C}^{N_t \times 1}$ is an instantaneous channel vector in the frequency domain, and $\mathbf{v}_n \in \mathbb{C}^{N_t \times 1}$ is a precoding vector, and $x_n \in \mathbb{C}$ is a data symbol transmitted in downlink, and $z_n \in \mathbb{C}$ is additive white Gaussian noise (AWGN), and n is a subcarrier index, and $N_c$ is the number of subcarriers.

The channel vector $\mathbf{h}_n$ for the n-th subcarrier, is estimated by the UE and may be fed back to the base station. Considering all subcarriers in total, the CSI matrix, which may be expressed as $\mathbf{H} = [\mathbf{h}_n, \quad \ldots, \quad \mathbf{h}_{N_c}]^H \in \mathbb{C}^{N_c \times N_t}$, shall be properly fed back from the UE to the base station so that the base station can correctly determine the precoding vectors.

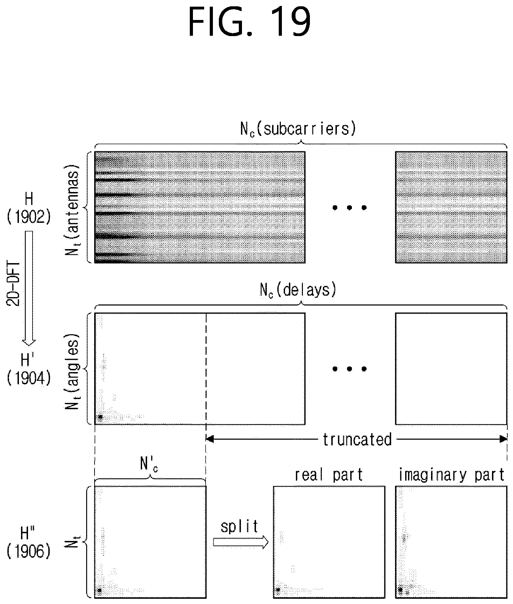

The CSI matrix in the spatial-frequency domain H may be processed as shown in FIG. 19 below. FIG. 19 shows an example of a processing process of a CSI matrix in a neural network for channel state information feedback. FIG. 19 shows a representation of a matrix in a reversed manner, compared to the general representation of a matrix. Referring to FIG. 19, preprocessing may be performed, in which a two-dimensional (2D) discrete Fourier transform (DFT) and truncation along a delay axis in an angular-delay domain, and separation into a real part and an imaginary part are sequentially performed. That is, for CSI network utilization, preprocessing including the following three steps may be performed, as in FIG. 19.

(1) 2D-DFT

The CSI matrix in the angular-delay domain H' may be obtained from the CSI matrix in the spatial-frequency domain H. The relationship is H' = $F_d$H$F_a$. Herein, $F_d \in \mathbb{C}^{N_c \times N_c}$ and $F_a \in \mathbb{C}^{N_t \times N_t}$ are two DFT matrices.

(2) Truncation with respect to delay-axis

Because the time delay between multipath arrivals exist within a limited period, the time delays for all subcarriers are placed within a specific period. Therefore, the CSI matrix in the angular-delay domain H' has large values only in the first $N'_c$ rows, and has values close to 0 in the remaining parts. Therefore, if only the first $N'_c$ rows of the CSI matrix in the angular-delay domain H' are taken, $H'' \in \mathbb{C}^{N'_c \times N_t}$ is obtained.

(3) Split into a real part and an imaginary part

The truncated CSI matrix $H'' \in \mathbb{C}^{N'_c \times N_t}$ is composed of complex numbers for each element of the matrix, but the general neural network has difficulty in handling complex numbers. Therefore, for the convenience of processing in the neural network, two matrices may be created by dividing the real part and the imaginary part of each element, and a tensor having a size of $2 \times N'_c \times N_t$ may be configured by stacking two matrices along a third dimension.

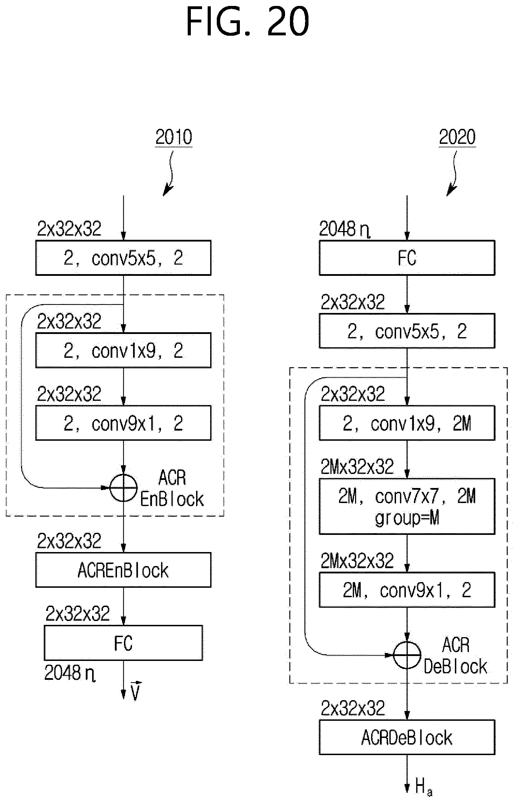

FIG. 20 shows an example of a structure of an encoder and a decoder for CSI feedback. FIG. 20 shows ACRNet, which is an example of a CSI network structure. Referring to FIG. 20, it may be confirmed that ACRNet includes a structure called ACREnBlock, which is a type of residual block, in the encoder (2010) as well as the decoder (2020).

The feedback transmission rate may change depending on the coherence time of the channel. In other words, the feedback transmission rate may need to be adjusted depending on the environment. Since the neural network model of the CSI network shall change depending on the feedback transmission rate in the existing CSI network structures, the UE and the base station shall store multiple models, i.e., parameter sets. However, since the storage space in the UE and the base station is a finite resource, a CSI network structure that can support a variable feedback transmission rate through a single model, i.e., a parameter set, is required. Accordingly, in the present disclosure, a structure of a CSI network that can support a variable feedback transmission rate using a single neural network model and a training method for the CSI network are proposed.

The CSI network according to various embodiments supports transmitting a CSI feedback signal at different feedback transmission rates while using the same neural network model and the same parameter set. In the present disclosure, the proposed CSI network may be referred to as accumulable feature extraction before skip connection (ABC)-Net.

In the present disclosure, for the convenience of explanation, the compressed information, which is the output of the CSI encoder and the input of the CSI decoder, may be referred to as the CSI feedback signal. The present disclosure considers the case where the CSI feedback signal is in the form of a bit stream. The bit stream means a sequence of binary digits/bits of 0 or 1, rather than a vector of floating point numbers. Therefore, in the present disclosure, the CSI feedback bit stream is treated as the output of the encoder and the input of the decoder. However, the embodiments described below are not limited to signals in the form of the bit stream. Therefore, the CSI feedback bit stream may be referred to as a 'CSI feedback value', a 'CSI value', etc.

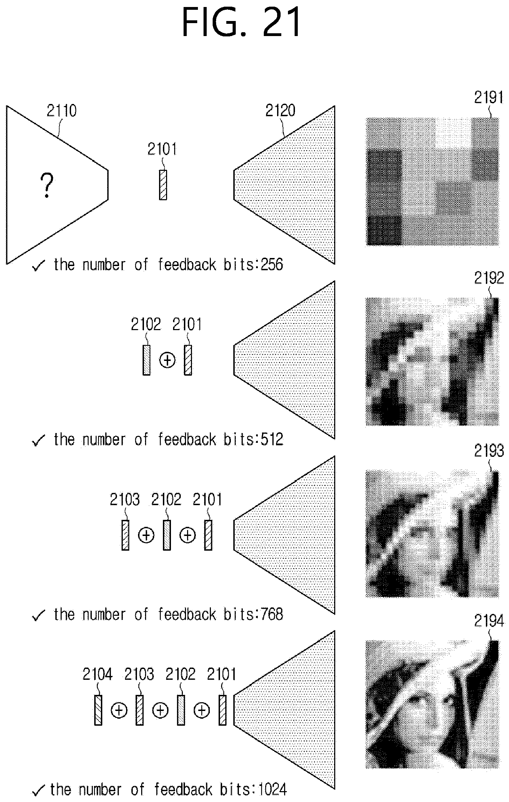

An example of a situation where different CSI feedback bit streams are combined before being input to the decoder is as shown in FIG. 21 below. FIG. 21 shows a concept of CSI feedback supporting a variable feedback transmission rate based on an embodiment of the present disclosure. FIG. 21 shows a concept of a CSI feedback technique proposed in the present disclosure. In the proposed CSI feedback technique, different CSI feedback bit streams may be combined before being input to the decoder neural network (2120) of the CSI network. Therefore, the input dimension of the decoder neural network (2120) may be maintained, the structure of the decoder neural network (2120) may be maintained as is, and further, the model parameter set of the decoder neural network (2120) may also be maintained as is.

Referring to FIG. 21, regardless of the number of CSI feedback bit streams combined before being input to the decoder neural network (2120), the same decoder neural network (2120) model may always be used. The number of feedback bits increases in proportion to the number of CSI feedback bit streams input by being added to the decoder neural network (2120). For example, if the length of the CSI feedback bit stream that can be input to the decoder neural network (2120) alone is 256 bits, the number of feedback bits will increase to 512, 768, and 1024 as the number of CSI feedback bit streams increases to 2, 3, and 4, respectively.

Meanwhile, even if the same decoder neural network (2120) model is used, the CSI reconstruction performance may be improved as the number of CSI feedback bit streams input to the decoder neural network (2120) increases. FIG. 21 metaphorically represents an improvement in CSI reconstruction performance as the number of CSI feedback bit streams increases, through the change in resolution of the reconstructed Lenna image. Specifically, the second image (2192) reconstructed based on two CSI feedback bit streams (2101, 2102) has a higher resolution than the first image (2191) reconstructed based on one CSI feedback bit stream (2101). Similarly, it is confirmed that the resolution gradually increases in the order of the third image (2193) reconstructed based on three CSI feedback bit streams (2102 to 2103) and the fourth image (2194) reconstructed based on four CSI feedback bit streams (2102 to 2104).

However, in FIG. 21, what is expressed as Lena's image is purely a metaphor, and information such as the CSI matrix that can actually be reconstructed from the CSI network is not recognized by the human eye like an image. The expression of the increase in CSI reconstruction performance as an increase in resolution in the image is also merely a metaphor, and should not be understood as the CSI reconstruction performance improving in terms of the resolution of the image. This is because, due to the nature of deep learning, it is difficult to precisely explain what meaning the different CSI feedback bitstreams added to the decoder neural network (2120) have and what role they play as signals.

In FIG. 21, multiple CSI feedback bit streams (2101 to 2104) having different roles are combined before being inputted into the decoder neural network (2120). The first CSI feedback bit stream (2101) may be a signal for which CSI reconstruction is possible even if it is inputted into the decoder neural network (2120) alone. The second CSI feedback bit stream (2102) may be a signal for which CSI reconstruction is possible only if it is inputted into the decoder neural network

(2120) in addition to the first CSI feedback bit stream (2102). In this way, the CSI feedback bit streams generated by the encoder neural network (2110) may be classified into a CSI feedback bit stream for which CSI reconstruction is possible even when input to the decoder neural network (2120) alone, and a CSI feedback bit stream for which CSI reconstruction is possible only when combined. In this case, the former CSI feedback bit stream may be referred to as an 'independent CSI bit stream', and the latter CSI feedback bit stream may be referred to as a 'dependent CSI bit stream'.

In the present disclosure, in expressions such as "added before being input to the decoder neural network", "added and then input to the decoder neural network", or "added to and input to the decoder neural network", which are intended to refer to the combination of bit streams included in the CSI feedback signal, the operation "added" may be understood not only as summation but also as one of a weighted sum, a weighted average, or various numerical processing methods that can be derived therefrom.

As shown in FIG. 21, CSI feedback bit streams (2101 to 2104) that can be input after being combined into the decoder neural network (2120) while performing different roles are generated by the encoder neural network (2110). The structure of the encoder neural network (2110) will be described below.

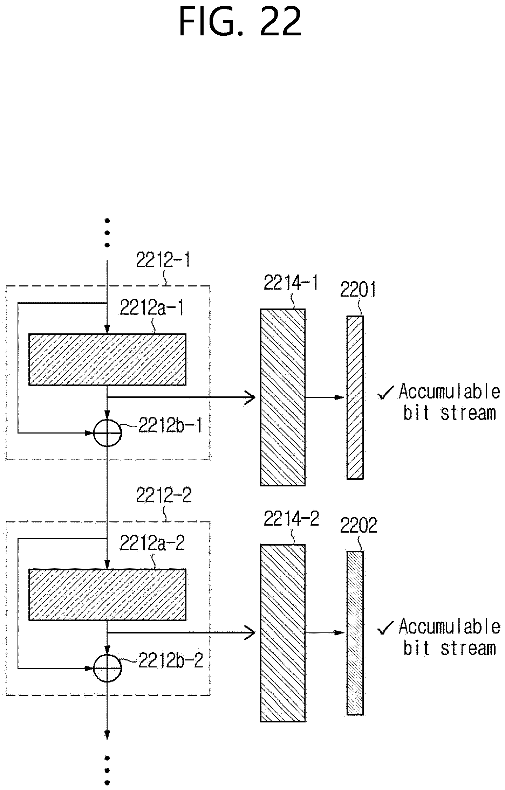

FIG. 22 shows a concept of feature extraction before skip connection to support a variable feedback transmission rate based on an embodiment of the present disclosure. Each of the blocks (2212-1, 2212-2) represented by dotted lines in FIG. 22 may have a ResNet structure (ResNet-like architecture). Specifically, as blocks (2212-1, 2212-2), ACREnBlock, a JC-ResNet block in the encoder of JC-ResNet listed in [Table 2], an encoder Head variant C in BCsiNet, one of a part of the encoder structure of CRNet, or a modified structure thereof may be applied.

Referring to FIG. 22, the block (2212-1) includes the layer set (2212a-1) including at least one layer, and the summer (2212b-1), and the summer (2212b-1) adds an output of the layer set (2212a-1) and an input of the layer set (2212a-1) provided from skip connection. The layer set (2212a-1) includes at least one layer. Specifically, the layer set (2212a-1) may be at least one convolutional layer. The output block (2214-1) connected to the block (2212-1) generates a bit stream that may be transmitted as a CSI feedback signal. For example, the output block (2214-1) may include a fully-connected (FC) layer. The output of the output block (2214-1) including the FC layer may be a vector consisting of real numbers.

In order to output a bipolar vector $\mathbf{q} \in \{\pm 1\}^B$ equivalent to a bit stream containing B bits as the output of the FC layer, a sign function sgn($\cdot$) may be used as the activation function of the FC layer. The sign function is also called the signum function and is defined as in [Equation 2] below.

[Equation 2]

$$sgn(x) := \begin{cases} -1 & if\ x < 0, \\ 0 & if\ x = 0, \\ 1 & if\ x > 0. \end{cases}$$

In [Equation 2], sgn(x) means a sign function for the input value x.

In the case of an encoder of a general CSI network, if the feedback transmission rate changes, the output dimension of the encoder neural network may change. This may cause the change in the structure of the encoder neural network itself. Even if the structure of the encoder neural network does not change depending on the feedback transmission rate, it is generally inevitable that at least the model parameter set of the encoder neural network varies depending on the feedback transmission rate.

The encoder neural network according to various embodiments, such as FIG. 22, may output CSI feedback bit streams of different roles. Considering that the CSI feedback bit streams of different roles may be combined as in FIG. 21 and then input to the decoder neural network, the CSI feedback bit streams of different roles may also be referred to as CSI feedback bit streams of different levels. As in FIG. 22, the CSI feedback bit streams of different levels may be obtained from blocks (2212-1, 2212-2) having ResNet-like architectures of different locations.

In the encoder neural network structure of ABC-Net in FIG. 22, in order to output CSI feedback bit streams of different levels, a signal immediately before skip connection of the ResNet structure is input to an output block (2214-1 or 2214-2), and the output block (2214-1 or 2214-2) outputs a CSI feedback bit stream (2201 or 2202). That is, it may be said that the characteristic of the proposed ABC-Net structure is to perform feature extraction using a residual signal immediately before being added to the identity signal. That is, ABC-Net has a characteristic of feature extraction before skip connection. However, a feature vector extracted before skip connection is an accumulable signal in the decoder. Therefore, it may be understood that an accumulable feature is extracted. That is, ABC-Net has a characteristic of accumulable feature extraction before skip connection.

One of the features of ABC-Net may be understood as the encoder neural network performing feature extraction using the residual signal before skip connection. This feature is to generate CSI feedback bit streams of different levels that may be combined before being input to the decoder neural network. That is, instead of the combining operation being omitted in the encoder, a feedback signal having the characteristic of being performed before being input to the decoder is used as the CSI feedback signal of the CSI network according to various embodiments. In the present disclosure, the CSI feedback signals of different levels that can be combined before being input to the decoder neural network may be referred to as 'accumulable feedback signals' or other terms having an equivalent technical meaning therefor.

Hereinafter, in the present disclosure, a method for performing training on a CSI network architecture that generates and interprets accumulable feedback signals like the aforementioned ABC-Net is proposed.

In general, wireless communication assumes a situation where the UE is moving (mobile). Therefore, the distribution or statistics of the wireless channel may change frequently. Depending on the change in the channel distribution or statistics, the encoder and decode neural network models of the CSI network shall be changed, but it is realistically difficult to download the changed model or parameter set to the UE every time. In addition, it is difficult to make various parameter sets readily available by pre-learning models or parameter sets for all cases in the channel distribution or statistics. Therefore, online learning may be considered.

In the following description, ABC-Net is exemplified as a CSI network structure using accumulable feedback signals for convenience of explanation. In fact, ABC-Net may be the only proposed CSI network structure using accumulable feedback signals at present, but the embodiments described below are not applicable only to ABC-Net. Hereinafter, as an example of the CSI network using accumulable feedback signals, an embodiment supporting up to two CSI feedback bit streams is described.

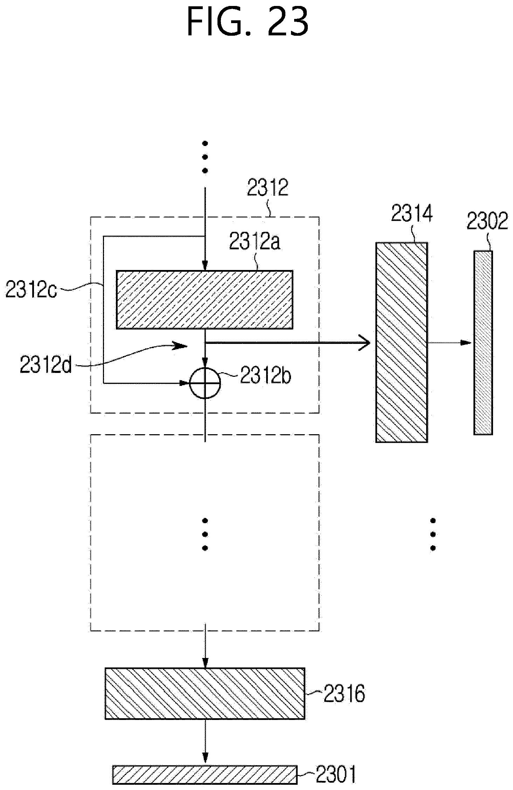

FIG. 23 shows an example of an encoder neural network supporting a variable feedback transmission rate based on an embodiment of the present disclosure. FIG. 23 shows a structure for a case where there are two types of CSI feedback bit streams transmitted from a UE to a base station as uplink feedback. The first CSI feedback bit stream (2301) is a signal capable of restoring channel information even when input to the decoder neural network alone. On the other hand, the second CSI feedback bit stream (2302) shall be combined with the first CSI feedback bit stream (2301) to reconstruct CSI in the decoder neural network. The first CSI feedback bit stream (2301) may be referred to as a 'main stream' or other terms having an equivalent technical meaning therefor. The second CSI feedback bit stream (2302) may be referred to as a 'side stream' or other terms having an equivalent technical meaning therefor.

The first CSI feedback bit stream (2301) includes a feature value generated by the first output layer (2316) connected to a path including all internal blocks. Here, all internal blocks include all remaining hidden layers except for other output layers (e.g., the second output layer (2314)). Since the first output layer (2316) generates the first CSI feedback bit stream (2301) that can be decoded independently, it may be referred to as a 'main output layer' or other terms having an equivalent technical meaning.

The second CSI feedback bit stream (2302) includes a feature value generated by the second output layer (2314) connected to a path including a part of internal blocks. The second output layer (2314) corresponds to a unit block (2312) including a part of layers (2312a), operators (2312b), and skip paths (2312c) in the encoder neural network. Herein, the second output layer (2314) generates the feature value using a signal of a point (2312d) preceding the end of the skip path (2312c) among various points within the unit block (2312). Since the second output layer (2314) generates the second CSI feedback bit stream (2302) that cannot be decoded alone, it may be referred to as a 'supplementary output layer' or other terms having an equivalent technical meaning therefor.

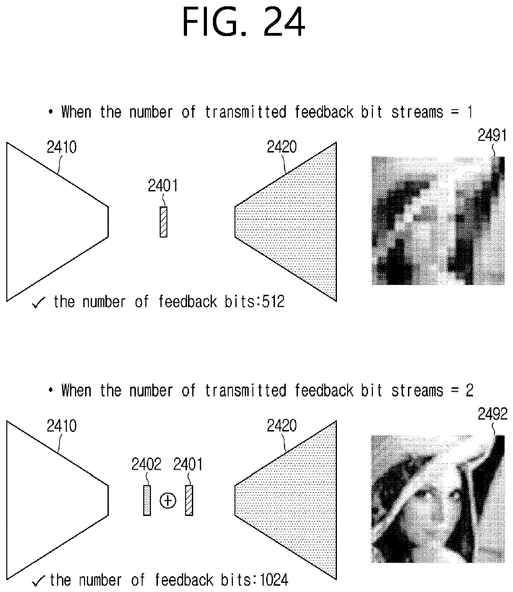

FIG. 24 shows an example of reconstructed channel information according to a change in feedback transmission rate based on an embodiment of the present disclosure. Referring to FIG. 24, if there is one feedback bit stream, the encoder neural network (2410) outputs the first CSI feedback bit stream (2401), and the decoder neural network (2420) reconstructs channel information from the first CSI feedback bit stream (2401). If there are two feedback bit streams, the encoder neural network (2410) outputs the first CSI feedback bit stream (2401) and the second CSI feedback bit stream (2402), and the decoder neural network (2420) reconstructs channel information from a combination of the first CSI feedback bit stream (2401) and the second CSI feedback bit stream (2402).

The first CSI feedback bitstream (2301), which can be decodable alone without being combined with other signals, may be obtained by feature extraction performed after skip connection. On the other hand, the second CSI feedback bit stream (2302), which can be input to the decoder neural network by being added with other signals, may be obtained by feature extraction performed before skip connection. CSI feedback bit streams of different levels may be obtained from blocks of ResNet structures at different locations.

Referring to FIG. 24, if only one CSI feedback bit stream is transmitted alone from the UE to the base station, the number of feedback bits may be 512. If both CSI feedback bit streams are transmitted from the UE to the base station, the number of feedback bits may be 1024. If the combination of two CSI feedback bit streams is input to the decoder neural network, the CSI reconstruction performance may be better than the case where only one CSI feedback bit stream is input alone to the decoder neural network. FIG. 24, similarly to FIG. 21, metaphorically represents an improvement in CSI reconstruction performance as the number of CSI feedback bit streams increases, by showing an increase in the resolution of the Lenna image.

All CSI feedback bit streams of different levels may be output by the same encoder neural network model having the same parameter set. In both cases where only one CSI feedback bit stream is input to the decoder neural network and where the combination of two different CSI feedback bit streams is input to the decoder, the same decoder neural network model having the same parameter set may be used. That is, regardless of the number of CSI feedback bit streams transmitted from the UE to the base station, the same encoder neural network model and decoder neural network model may always be used.

As described above, multiple CSI feedback bit streams may be transmitted from the UE to the base station. In this case, the multiple CSI feedback bit streams may be transmitted during one CSI feedback occasion, or may be transmitted sequentially over multiple CSI feedback occasions. Even if the CSI feedback bit streams are transmitted time-distributed over multiple CSI feedback occasions, if all of the multiple CSI feedback occasions are within the interval of the channel's correlation time, the CSI feedback bit streams may be understood as representing the same channel.

In the present disclosure, in expressions such as "added before being input to the decoder neural network", "added and then input to the decoder neural network", or "added to and input to the decoder neural network", which are intended to refer to the combination of bit streams included in the CSI feedback signal, the operation "added" may be understood not only as summation but also as one of a weighted sum, a weighted average, or various numerical processing methods that can be derived therefrom. Therefore, the most general expression for accumulable feedback signals is a weighted sum. Therefore, in the present disclosure, a learning procedure of a CSI network in which accumulable feedback signals exist based on a weighted sum is described. The weighted average may be interpreted as a weighted sum when the sum of the weights is 1, and in the case of a simple sum, it may be interpreted as a weighted sum where all the weights are 1.

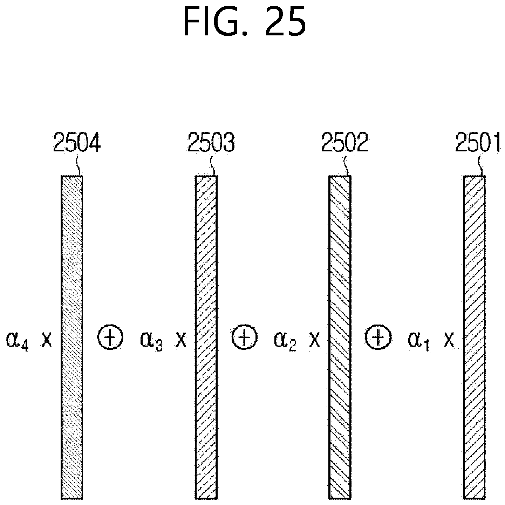

FIG. 25 shows an example of weights for a weighted sum of feedback signals based on an embodiment of the present disclosure. FIG. 25 shows a situation in which each weight for a weighted sum can be trained as a learnable parameter in a situation in which bit streams, which are accumulable feedback signals, are added as a weighted sum. FIG. 25 considers a case in which the total number of streams is 4. $\mathbf{q}_s$ denotes the s-th feedback bit stream, and $\alpha_s$ is a learnable parameter multiplied by the s-th feedback bit stream. That is, the input of the decoder neural network is $\sum_s \alpha_s \mathbf{q}_s$. In FIG. 25, the length of $\mathbf{q}_s$ may be 256. That is, if only $\mathbf{q}_1$ is fed back from the UE to the base station, 256 bits may be transmitted, if $\mathbf{q}_1$ and $\mathbf{q}_2$ are fed back, 512 bits may be transmitted, **if $\mathbf{q}_1$, $\mathbf{q}_2$** and $\mathbf{q}_3$ are fed back, 768 bits may be transmitted, and if $\mathbf{q}_1$, $\mathbf{q}_2$, $\mathbf{q}_3$ and $\mathbf{q}_4$ are fed back, 1024 bits may be transmitted.

Depending on the number of feedback bits $N_{fb}$, learnable parameters $\alpha_{s\_(N_{fb})}$ (e.g., weights used in the weighted sum) may vary. $\alpha_{s\_(N_{fb})}$ means the weight multiplied to the s-th feedback bit stream if the number of feedback bits is $N_{fb}$. Since the number of feedback bit streams varies depending on the number of feedback bits $N_{fb}$, the number of weights used in the weighted sum may also vary. In FIG. 25, if $N_{fb}$=1024, the number of feedback streams is 4, so the weights used in the weighted sum are also 4, as in $\{\alpha_{1\_(1024)}, \alpha_{2\_(1024)}, \alpha_{3\_(1024)}, \alpha_{4\_(1024)}\}$. If $N_{fb}$=768, the number of feedback streams is 3, so the learnable parameters required for the weighted sum are also 3, as in $\{\alpha_{1\_(768)}, \alpha_{2\_(768)}, \alpha_{3\_(768)}\}$. If $N_{fb}$=512, the number of feedback streams is 2, so the weights used in the weighted sum are also 2, as in $\{\alpha_{1\_(512)}, \alpha_{2\_(512)}\}$. If $N_{fb}$=256, a single feedback stream is transmitted, so it may be seen that only $\alpha_{1\_(256)}$ exists.

If a constraint such as $\sum_s \alpha_{s\_(N_{fb})} = 1$ is added to the learnable parameters $\left\{\alpha_{s\_(N_{fb})}\right\}_{s=1,\dots}$ used in the weighted sum, the weighted sum may be a weighted average. For example, in FIG. 25, if $N_{fb}=1024$, it may be $\alpha_{1\_(1024)} + \alpha_{2\_(1024)} + \alpha_{3\_(1024)} + \alpha_{4\_(1024)} = 1$. If $N_{fb}=768$, it may be $\alpha_{1\_(768)} + \alpha_{2\_(768)} + \alpha_{3\_(768)} = 1$. If $N_{fb}=512$, it may be $\alpha_{1\_(512)} + \alpha_{2\_(512)} = 1$. If $N_{fb}=256$, a single feedback stream is transmitted and received, and it may be $\alpha_{1\_(256)} = 1$.

In FIG. 25, if $N_{fb}=1024$, $\mathbf{v}_{1024} = \sum_{s=1}^{4} \alpha_{s\_(1024)} \mathbf{q}_s$ is input to the decoder neural network, and if $N_{fb}=768$, $\mathbf{v}_{768} = \sum_{s=1}^{3} \alpha_{s\_(1024)} \mathbf{q}_s$ is input to the decoder neural network, and if $N_{fb}=512$, $\mathbf{v}_{512} = \sum_{s=1}^{2} \alpha_{s\_(512)} \mathbf{q}_s$ is input to the decoder neural network, and if $N_{fb}=256$, $\mathbf{v}_{256} = \alpha_{1\_(256)} \mathbf{q}_1$ is input to the decoder neural network. FIG. 25 shows that CSI reconstruction performance improves as the number of feedback bits $N_{fb}$ increases.

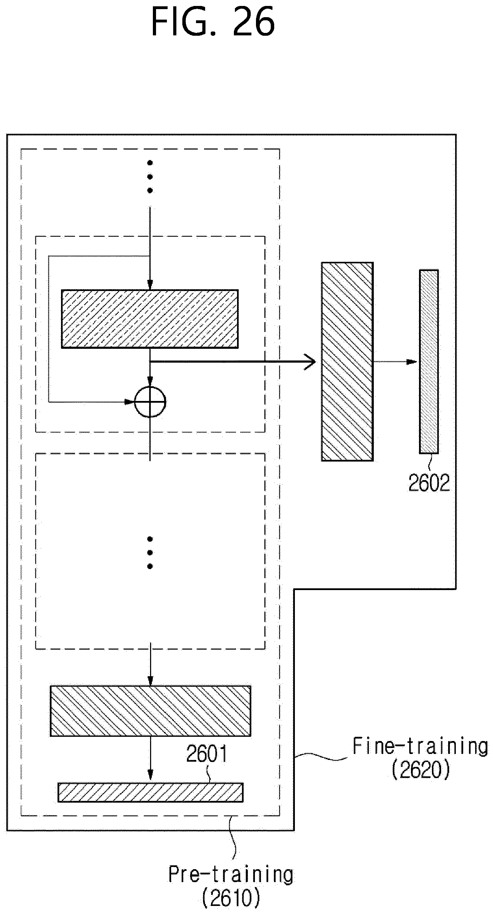

FIG. 26 shows an example of a training method for a neural network based on an embodiment of the present disclosure. FIG. 26 shows a method of training ABC-Net, including pre-training (2610) and fine-tuning (2620). ABC-Net of FIG. 26 shows a case where the maximum number of supportable feedback streams is 2. While the main stream (2601) can be decoded alone without being added to other signals, the side stream (2602) can be input to the decoder neural network after being added to other signals. In order for CSI feedback signals of different levels (e.g., the main stream and the side stream) to sufficiently play their respective roles, an appropriate learning method is required. Based on an embodiment, the following two-phase learning may be performed.

► Phase I, Pre-training: Only the main stream signal is input to the decoder neural network, and the side stream is excluded from the learning process. Training may be performed until sufficient CSI reconstruction performance is achieved using only the main stream. In this case, the encoder neural network and the decoder neural network are trained together.

► Phase II, Fine-tuning: Based on the model or parameter set obtained through Step I, training is performed to use the main stream and the side stream. In this case, the signal in which the main stream and the side stream are combined is input to the decoder neural network. As the learning of Step II progresses, a kind of trade-off phenomenon may occur in which the performance when performing CSI reconstruction using only the main stream decreases, while the performance when performing CSI reconstruction including both the main stream and the side stream improves. If training is performed until an appropriate balance point in the trade-off is reached, the training result can be utilized as the final model or parameter set.

In the CSI network with accumulable feedback signals such as ABC-Net, the locations of the encoder neural network where different signals are output or the parts that generate the signals may be different. Therefore, an appropriate learning method may include a procedure for training only a specific part of the network, and depending on the progress level of learning or the purpose of learning, the part of the entire network that is targeted for training may vary. Therefore, depending on the progress level of learning or the purpose of learning, the computational graph for backpropagation may vary. In offline learning, the variation of the computational graph for backpropagation may not be a big problem, but in online learning, since both the encoder-side (e.g., UE) and the decoder-side (e.g., base station) must know the consistent computational graph between each other, it is required to solve the problem of the variation of the computational graph during the learning process.

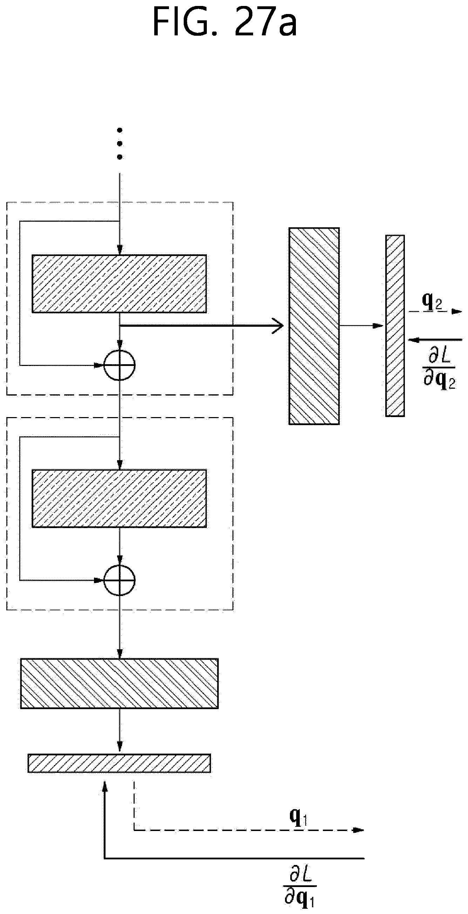

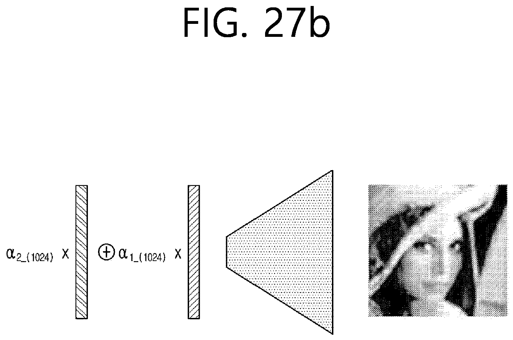

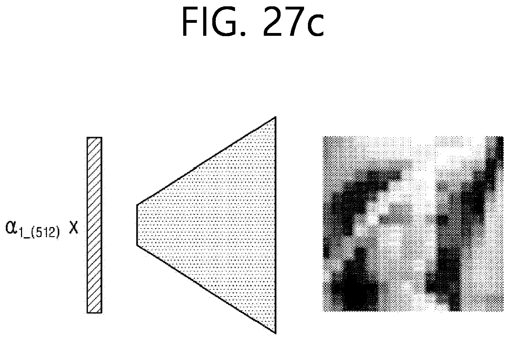

FIGs. 27a to 27c show examples of cases where a computational graph varies in training a neural network based on an embodiment of the present disclosure. FIG. 27a shows a problem where a computational graph for backpropagation varies depending on the number of feedback streams transmitted during the training process of ABC-Net. FIG. 27a shows paths of backpropagation in ABC-Net where the maximum number of supportable feedback streams is 2. In FIGs. 27a to 27c, if only one CSI feedback bit stream $\mathbf{q}_1$ is transmitted from the UE to the base station, the number of feedback bits is 512, and $\mathbf{v}_{512} = \alpha_{1\_(512)}\mathbf{q}_1 = \mathbf{q}_1$ is input to the decoder neural network. If both CSI feedback streams $\mathbf{q}_1$ and $\mathbf{q}_2$ are transmitted from the UE to the base station, the number of feedback bits is 1024, and $\mathbf{v}_{1024} = \alpha_{2\_(1024)}\mathbf{q}_2 + \alpha_{1\_(1024)}\mathbf{q}_1$ is input to the decoder neural network.

In FIG. 27a, if only the part corresponding to the main stream is trained (e.g., if performing step I), the encoder-side (e.g., UE) may only transmit $\mathbf{q}_1$ to the decoder-side (e.g., base station) through the forward pass. On the other hand, if the entire neural network, including both the main stream and the side stream, is trained (e.g., if performing step II), the encoder-side (e.g., UE) shall transmit $\mathbf{q}_2$ as well as $\mathbf{q}_1$ to the decoder-side (e.g., base station) through the forward pass.

A loss value $L$ determined by a loss function may be a scalar-valued function of the input of the encoder neural network $\mathbf{H}'' \in \mathbb{C}^{N_c' \times N_t}$ or $\mathbf{H} = [\mathbf{h}_n, \quad ..., \quad \mathbf{h}_{N_c}]^H \in \mathbb{C}^{N_c \times N_t}$ and the output of the decoder neural network $\widehat{\mathbf{H}''} \in \mathbb{C}^{N_c' \times N_t}$ in the CSI network. It is obvious that if the process corresponding to the inverse of the aforementioned preprocessing process is applied to the output of the decoder neural network $\widehat{\mathbf{H}''}$ as post-processing, $\widehat{\mathbf{H}} = [\widehat{\mathbf{h}_n}, \quad ..., \quad \widehat{\mathbf{h}_{N_c}}]^H \in \mathbb{C}^{N_c \times N_t}$ can be obtained. Therefore, the loss value $L$ may be a function of $\mathbf{H}$ and $\hat{\mathbf{H}}$. Herein, the loss value may be determined by the loss function based on the output of the decoder neural network (e.g., the reconstructed channel) and the label (e.g., the estimated channel or the actual channel).

If only $\mathbf{q}_1$ is transmitted through the forward path (e.g., if performing step I), $\frac{\partial L}{\partial \mathbf{q}_1} = \frac{\partial L}{\partial \mathbf{v}_{512}} \frac{\partial \mathbf{v}_{512}}{\partial \mathbf{q}_1} = \alpha_{1\_(512)} \frac{\partial L}{\partial \mathbf{v}_{512}} = \frac{\partial L}{\partial \mathbf{v}_{512}}$ needs to be backpropagated from the decoder-side (e.g., base station) to the encoder-side (e.g., UE). On the other hand, if $\mathbf{q}_2$ is transmitted along with $\mathbf{q}_1$ through the forward path (e.g., if performing step II), $\frac{\partial L}{\partial \mathbf{q}_2} = \frac{\partial L}{\partial \mathbf{v}_{1024}} \frac{\partial \mathbf{v}_{1024}}{\partial \mathbf{q}_2} = \alpha_{2\_(1024)} \frac{\partial L}{\partial \mathbf{v}_{1024}}$ also needs to be backpropagated along with $\cdot\frac{\partial L}{\partial \mathbf{q}_1} = \frac{\partial L}{\partial \mathbf{v}_{512}} \frac{\partial \mathbf{v}_{512}}{\partial \mathbf{q}_1} = \alpha_{1\_(512)} \frac{\partial L}{\partial \mathbf{v}_{512}} = \frac{\partial L}{\partial \mathbf{v}_{512}}$ from the decoder side (e.g., base station) to the encoder side (e.g., UE).

In order for a CSI network in which multiple feedback streams can be transmitted from the encoder-side (e.g., UE) to the decoder-side (e.g., base station) to be trained through online learning, multiple gradient vectors, as many as the number of feedback streams, need to be transmitted from the decoder-side (e.g., base station) to the encoder-side (e.g., UE). In other words, compared to a CSI network that supports only a single feedback bit stream, the signaling overhead for online learning for the CSI network that supports multiple feedback streams may increase by the number of feedback streams. Therefore, an effective online learning procedure that can train a CSI network in which accumulable feedback signals exist while solving the problem of increased signaling overhead due to multiple gradients is required.

Hereinafter, in the present disclosure, online learning procedure that can train a CSI network in which accumulable feedback signals exist while solving the problem of increased signaling overhead due to multiple gradients is proposed.

Before explaining the learning procedure, the present disclosure first explains a method for configuring an encoder neural network that outputs a bit stream as a CSI feedback signal. In general, the output of the fully-connected (FC) layer may be a vector consisting of real numbers. In order to output a bipolar vector $\mathbf{q} \in \{\pm 1\}^B$ equivalent to a bit stream containing B bits as the output of the FC layer, a sign function sgn($\cdot$) may be used as the activation function of the FC layer. The sign function is also called a signum function and is defined as in [Equation 2] above. In order for the CSI feedback signal to be output from the encoder neural network in the form of a bit stream and input to the decoder neural network, a known technique can be utilized.

However, the sgn($\cdot$) function has a gradient (e.g., derivative) of 0 in most of its domain, and is not differentiable in the remaining parts. Therefore, the gradient disappears in almost the entire region, making backpropagation difficult and training difficult. In order to solve the difficulty of training, a Straight-Through Estimator (STE), which may replace the sgn($\cdot$) function as a surrogate for backpropagation, may be used. In the forward path, the original quantized activation function is used, and only in backpropagation, the STE may be used. The STE properly approximates the original sgn($\cdot$) function, but it is differentiable in the required region and its derivative is no longer zero, so it may be used as a function to make the gradient non-trivial. For example, the sgn($\cdot$) function may be approximated and replaced as shown in [Equation 3] below.

[Equation 3]

$$\mathrm{sgn}(x) \approx 2\,\mathrm{sigm}\big(\gamma^{(i)}x\big) - 1 = \frac{2}{1 + \exp(-\alpha^{(i)}x)} - 1$$

$$\gamma^{(i)} \geq \gamma^{(i-1)}$$

In [Equation 3], sgn() is the sign function, and sigm() is the signum function, and $\gamma^{(i)}$ is the gradient of the sigmoid function that gradually increases as training progresses as an annealing factor at the i-th epoch.

As in [Equation 3], the STE that appropriately approximates the original function through the sigmoid function may be referred to as a sigmoid-adjusted STE. As the gradient of the sigmoid function increases, it approximates the signum function better. As shown in [Equation 3], the method in which the gradient of the sigmoid function increases as the number of epochs increases and learning progresses is referred to as a slope-annealing trick, and the performance of the STE can be further improved by using the slope-annealing method. For the convenience of explanation, in the present disclosure, the application of sigmoid-adjusted STE using slope annealing is assumed. However, the embodiments described below are not limited to the sigmoid-adjusted STE of the slope annealing method.

In order to distinguish it from the gradient in the general case where the STE is not used as a substitute function for backpropagation, the gradient obtained by passing through the STE in backpropagation may be referred to as a coarse gradient. In order for a learning method such as gradient descent to operate, the coarse gradient obtained by the STE-modified chain rule may be transmitted from the base station to the UE. In the present disclosure, the gradient may be understood as an expression encompassing the coarse gradient. That is, in the present disclosure, the gradient in the general case and the coarse gradient are not expressed differently from each other. However, for the convenience of explanation, since the present disclosure assumes the application of the sigmoid-adjusted STE using slope annealing, the gradient transmitted from the base station to the UE may be understood as the coarse gradient.

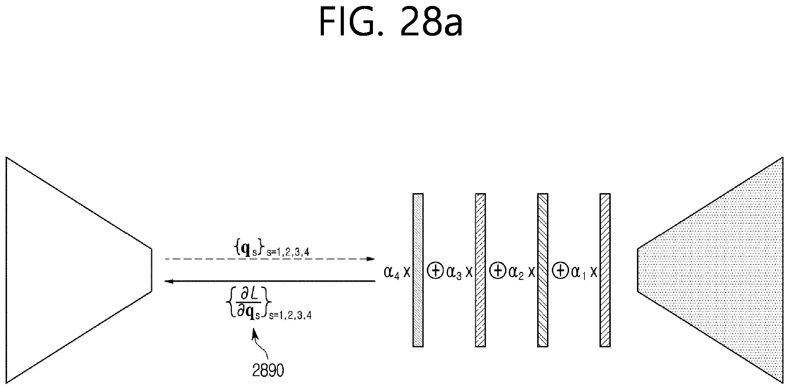

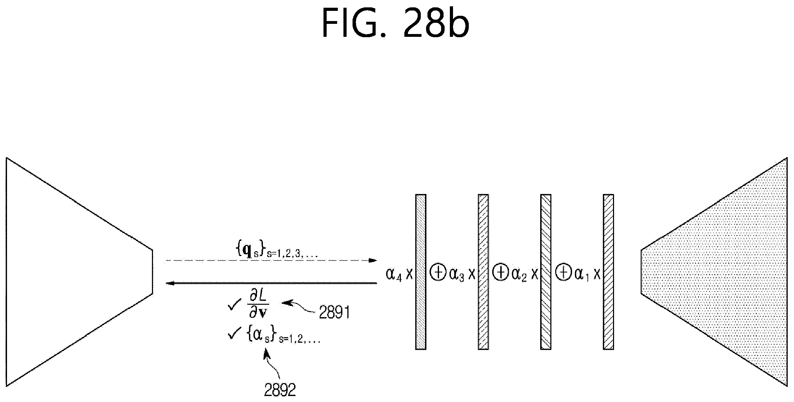

FIG. 28a and FIG. 28b show examples of signaling for training a CSI network using accumulable feedback signals based on an embodiment of the present disclosure. FIG. 28a and FIG. 28b show different schemes of signaling for training a CSI network. In the online learning process for a CSI network using accumulable CSI feedback signals, multiple gradient vectors may be transmitted from the decoder-side (e.g., base station) to the encoder-side (e.g., UE) during the backpropagation procedure. The signaling procedure shown in FIG. 28a or FIG. 28b may be repeated for each batch of online learning.

FIG. 28a shows the problem of multiple gradients in a CSI network with accumulable feedback signals if the number of feedback streams is 4. If transmitting gradient values without additional processing, as shown in FIG. 28a, since 4 feedback bit streams are supported, transmission of 4 gradient values (2890) is required. In this case, as the number of feedback bit streams increases, signaling overhead may be significant due to multiple gradient vectors.

Therefore, in order to reduce signaling overhead, as shown in FIG. 28b, in the operation of backpropagation, common gradient information (2891) may be transmitted from the decoder-side (e.g., base station) to the encoder-side (e.g., UE) instead of multiple gradient vectors. In contrast to the common gradient, each of gradients included in the multiple gradient vectors may be referred to as an 'individual gradient'. In this case, weights (2892) used for the weighted sum of the feedback streams that can be accumulated together with the common gradient information may also be transmitted from the decoder-side (e.g., base station) to the encoder-side (e.g., UE). The weights used in the weighted sum are learnable parameters, and each weight is a value multiplied by the corresponding feedback stream and decoder-side. That is, the input of the decoder neural network is $\sum_s \alpha_s q_s$.

For example, in the procedure of the forward pass, if multiple feedback streams $\{\mathbf{q}_1, \mathbf{q}_2, \mathbf{q}_3, \mathbf{q}_4\}$ are transmitted from the encoder-side (e.g., UE) to the decoder-side (e.g., base station), the base station may input $\mathbf{v} = \sum_{s=1}^{4} \alpha_s \mathbf{q}_s$ to the decoder neural network. If the subsequent training process is performed appropriately, the gradient for each layer of the loss value $L$ may be computed by propagating from the last layer of the decoder neural network to the input of the decoder neural network through backpropagation. Therefore, the gradient $\frac{\partial L}{\partial \mathbf{v}}$ of the loss value L with respect to the input v of the decoder neural network may be computed. As backpropagation proceeds, in order for the gradient for each layer of the encoder neural network to be calculated and transmitted the encoder-side (e.g., UE) needs to know information for multiple gradients $\left\{\frac{\partial L}{\partial \mathbf{q}_1}, \frac{\partial L}{\partial \mathbf{q}_2}, \frac{\partial L}{\partial \mathbf{q}_3}, \frac{\partial L}{\partial \mathbf{q}_4}\right\}$ for multiple feedback streams of the loss value L, so $\left\{\frac{\partial L}{\partial \mathbf{q}_1}, \frac{\partial L}{\partial \mathbf{q}_2}, \frac{\partial L}{\partial \mathbf{q}_3}, \frac{\partial L}{\partial \mathbf{q}_4}\right\}$ may be transmitted from the base station to the UE. Multiple gradients $\left\{\frac{\partial L}{\partial \mathbf{q}_1}, \frac{\partial L}{\partial \mathbf{q}_2}, \frac{\partial L}{\partial \mathbf{q}_3}, \frac{\partial L}{\partial \mathbf{q}_4}\right\}$ for multiple feedback streams may be computed respectively in the UE as shown in [Equation 4] below and transmitted to the base station.

[Equation 4]

$$\frac{\partial L}{\partial \mathbf{q}_1} = \frac{\partial L}{\partial \mathbf{v}} \frac{\partial \mathbf{v}}{\partial \mathbf{q}_1} = \alpha_1 \frac{\partial L}{\partial \mathbf{v}}$$

$$\frac{\partial L}{\partial \mathbf{q}_2} = \frac{\partial L}{\partial \mathbf{v}} \frac{\partial \mathbf{v}}{\partial \mathbf{q}_2} = \alpha_2 \frac{\partial L}{\partial \mathbf{v}}$$

$$\frac{\partial L}{\partial \mathbf{q}_3} = \frac{\partial L}{\partial \mathbf{v}} \frac{\partial \mathbf{v}}{\partial \mathbf{q}_3} = \alpha_3 \frac{\partial L}{\partial \mathbf{v}}$$

$$\frac{\partial L}{\partial \mathbf{q}_4} = \frac{\partial L}{\partial \mathbf{v}} \frac{\partial \mathbf{v}}{\partial \mathbf{q}_4} = \alpha_4 \frac{\partial L}{\partial \mathbf{v}}$$

In [Equation 4], $\alpha_s$ denotes a weight multiplied by the s-th feedback stream $\mathbf{q}_s$ to compute the input $\mathbf{v} = \sum_{s=1}^{4} \alpha_s \mathbf{q}_s$ of the decoder neural network.

For example, if each feedback stream $\mathbf{q}_s$ is a bit stream of 256 bits, the gradient $\frac{\partial L}{\partial \mathbf{q}_s}$ for the feedback stream $\mathbf{q}_s$ may be a 256-dimensional vector. Therefore, if the number of feedback streams is 4, 4×256=1024 real numbers may be transmitted from the base station to the UE.

However, based on various embodiments, instead of transmitting all of the multiple gradients $\left\{\frac{\partial L}{\partial \mathbf{q}_1}, \frac{\partial L}{\partial \mathbf{q}_2}, \frac{\partial L}{\partial \mathbf{q}_3}, \frac{\partial L}{\partial \mathbf{q}_4}\right\}$ for the multiple feedback streams from the base station to the UE, only the gradient $\frac{\partial L}{\partial \mathbf{v}}$ of the loss value $L$ with respect to the input v of the decoder neural network may be transmitted, as in FIG. 28b. In this case, since a single 256-dimensional vector corresponding to 256 real numbers is transmitted from the base station to the UE, the signaling overhead reduction effect can occur. The base station may transmit $\{\alpha_1, \alpha_2, \alpha_3, \alpha_4\}$ to the UE along with the common gradient information $\frac{\partial L}{\partial \mathbf{v}}$. Accordingly, as many as 4 real numbers, which are the number of feedback streams, may be additionally transmitted from the base station to the UE. Since the UE can compute the multiple gradients $\left\{\frac{\partial L}{\partial \mathbf{q}_1}, \frac{\partial L}{\partial \mathbf{q}_2}, \frac{\partial L}{\partial \mathbf{q}_3}, \frac{\partial L}{\partial \mathbf{q}_4}\right\}$ for the multiple feedback streams based on the received $\frac{\partial L}{\partial \mathbf{v}}$ and $\{\alpha_1, \alpha_2, \alpha_3, \alpha_4\}$, the gradients for each layer of the encoder neural network may be computed and propagated as backpropagation proceeds. That is, the CSI network in which accumulable feedback signals exist may be trained or learned. In this case, if each feedback stream $\mathbf{q}_s$ is a 256-bit bit stream and the number of feedback streams is 4, 4+256=260 real numbers may be transmitted from the base station to the UE.

If the method described above is applied, if the number of feedback streams is $S$ and each bit string is composed of $B$ bits (e.g., $B >> S$), the number of real numbers that needs to be transmitted from the base station to the UE in the backpropagation procedure for online learning of the CSI network is $S+B$. This can be seen as a reduction in overhead from $S \times B$ in the case of following the method of FIG. 28a to $S+B$. If considering the number of real numbers that needs to be transmitted from the base station to the UE in both cases by $B$, it can be seen that the signaling overhead required for $S$ is reduced by a factor of $1 + \frac{B}{S} \approx 1$, roughly the same as that for $\frac{1}{S}$.

In the present disclosure, the weight multiplied by the s-th feedback stream $\mathbf{q}_s$ to compute the input $\mathbf{v} = \sum_s \alpha_s \mathbf{q}_s$ of the decoder neural network is $\alpha_s$, and it is a learnable parameter. The $\{\alpha_s\}_{s=1,2,...}$, which needs to be transmitted from the decoder-side (e.g., base station) to the encoder-side (e.g., UE), may be quantized and transmitted in a manner agreed upon in advance between the UE and the base station, just like in the conventional digital communication. Based on an embodiment, a relative ratio (e.g., $\frac{\alpha_s}{\alpha_1}$) to $\alpha_s$, rather than an absolute value of $\alpha_s$, may be transmitted based on a specific order of weights. In addition, if the constraint of $\sum_{s=1}^{S} \alpha_s = 1$ is satisfied, only the remaining weights, excluding the specific order of weights, may be transmitted. For example, only the weights $\{\alpha_s\}_{s=1,2,...,S-1}$ excluding $\alpha_s$, may be transmitted. In this case, the encoder-side (e.g., UE) may compute the non-transmitted weights $\alpha_s$, based on the received $\{\alpha_s\}_{s=1,2,...,S-1}$ and the constraint $\sum_{s=1}^{S} \alpha_s = 1$, as $\alpha_S = 1 - \sum_{s=1}^{S-1} \alpha_s$. That is, part or all of $\{\alpha_s\}_{s=1,2,...}$ may be implicitly transmitted from the UE to the base station without being directly expressed. In addition, the common gradient information may also be transmitted in a manner agreed upon in advance between the UE and the base station, just like signaling in the conventional digital communication, quantization, etc.

As described above, the CSI network supporting the variable transmission rate may be constructed using accumulable CSI feedback bit streams. The CSI network according to various embodiments can be applied to various environments. Below, the operations of the base station and the UE when the CSI network according to the proposed technology is applied for downlink channel estimation are described. However, the CSI network according to various embodiments can be applied to other types of links such as uplink and sidelink, and in this case, the procedures described below can be implemented with some modifications.

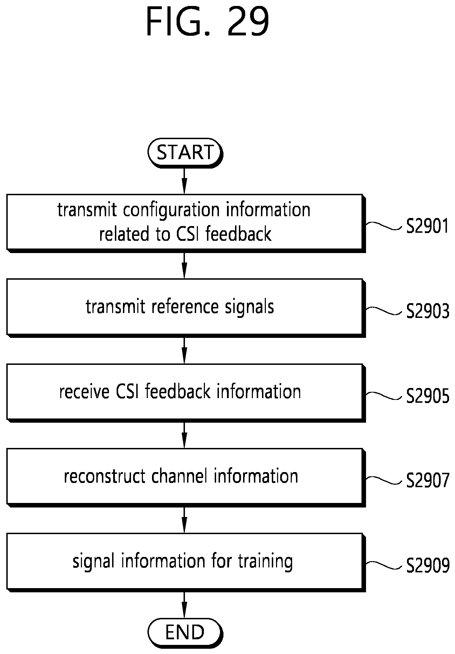

FIG. 29 shows an example of a procedure for performing learning for a decoder of a CSI network based on an embodiment of the present disclosure. FIG. 29 shows the operation method of the base station.

Referring to FIG. 29, in step S2901, the base station transmits configuration information related to CSI feedback. The configuration information may include at least one of information related to reference signals transmitted for channel measurement (e.g., resource, sequence, etc.), information related to channel measurement operation, or information related to feedback (e.g., format, resource, the number of feedbacks, period, etc.). In addition, based on various embodiments, the configuration information may further include information representing a transmission rate for CSI feedback.

In step S2903, the base station transmits reference signals. The base station transmits reference signals based on the configuration information. That is, the base station may transmit reference signals based on a sequence indicated by the configuration information through a resource indicated by the configuration information.

In step S2905, the base station receives CSI feedback information. That is, the base station receives CSI feedback information generated based on the transmitted reference signals. Based on various embodiments, the CSI feedback information includes at least one CSI value generated by the encoder neural network of the CSI network. Herein, the at least one CSI value may include at least one of CSI feedback bit streams to be combined before input to the decoder. If multiple CSI values are included, the multiple CSI values may be received within one CSI feedback occasion or may be received sequentially over multiple CSI feedback occasions having an interval within a correlation time of a channel. In this case, based on an embodiment, the CSI feedback information may include an indicator representing that the CSI values are transmitted over multiple CSI feedback occasions as control information required for the decoding operation.

In step S2907, the base station reconstructs channel information. In other words, the base station reconstructs the channel information based on at least one CSI value included in the CSI feedback information. Based on various embodiments, the base station may obtain the reconstructed channel information by inputting at least one CSI value into the decoder neural network of the CSI network and performing the inference operation. In this case, if multiple CSI values are received, the base station may generate an input value by combining the multiple CSI values and input the input values into the decoder neural network. In this case, the CSI value and the input value have the same dimension. Specifically, the input value is generated by the addition of the arithmetic operation on the multiple CSI values, and may be generated by, for example, summing, weighting, or weighted averaging the multiple CSI values.

In step S2909, the base station signals information for training. That is, the base station may transmit at least one message including information for training or receive at least one message. In addition, the base station may perform training on the decoder neural network of the CSI network using at least one of the CSI feedback information or the information for training received in step S2905. Herein, the information for training may include information for training on the encoder neural network included in the UE. That is, the base station transmits information for training the encoder neural network to the UE. For example, the information for training signaled between the base station and the UE is information used for performing backpropagation, and may include at least one of channel information reconstructed by the base station, channel information estimated by the UE, gradient information for the reconstructed channel of the loss function, gradient information for the CSI feedback information of the loss function, or gradient information for the weight of the loss function. Herein, the loss function may include a loss value determined based on the reconstructed channel and the estimated channel.

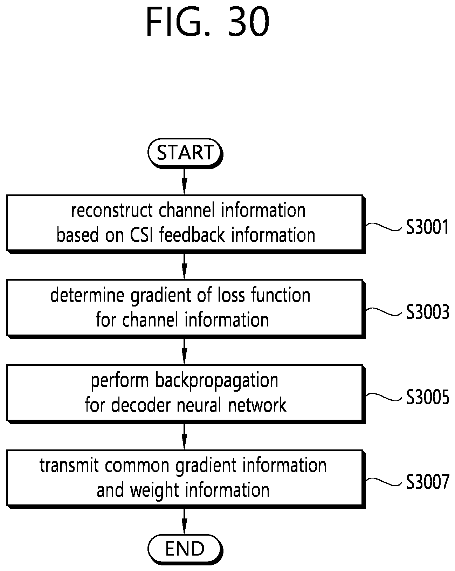

FIG. 30 shows an example of a procedure for processing information for training a decoder of a CSI network based on an embodiment of the present disclosure. FIG. 30 shows the operation method of the base station.

Referring to FIG. 30, in step S3001, the base station reconstructs channel information based on CSI feedback information. In other words, the base station reconstructs the channel information based on at least one CSI value included in the CSI feedback information received from the UE. Based on various embodiments, the base station may obtain the reconstructed channel information by inputting at least one CSI value into the decoder neural network of the CSI network and performing the inference operation. In this case, if multiple CSI values are received, the base station may generate an input value by combining the multiple CSI values and input the input values into the decoder neural network. In this case, the CSI value and the input value have the same dimension. Specifically, the input value is generated by the addition of the arithmetic operation on the multiple CSI values, and may be generated by performing, for example, the weighted summation on the multiple CSI values.

In step S3003, the base station determines a gradient of a loss value for channel information. The gradient of the loss value for the channel information (hereinafter, 'first gradient') is related to a loss value according to an error between an estimated channel and a reconstructed channel, and represents an amount of change in the loss value with respect to an amount of change in the reconstructed channel value. Based on an embodiment, the base station may receive information related to the first gradient (e.g., first gradient value) from the UE. In this case, the base station may transmit information related to the reconstructed channel to the UE so that the UE can determine the first gradient. Based on another embodiment, the base station may receive information related to the estimated channel (e.g., estimated channel value) from the UE. In this case, the base station may determine the loss value based on the estimated channel and the reconstructed channel, and calculate the first gradient based on the loss value.

In step S3005, the base station performs backpropagation for the decoder neural network. That is, the base station may update the parameter set of the neural network by performing backpropagation from the output layer to the input layer of the decoder neural network using the first gradient. Accordingly, a weight applied to the perceptrons included in the decoder neural network may be updated.

In step S3007, the base station transmits information related to a common gradient and information related to a weight. The common gradient is a gradient of a loss value with respect to an input value of the decoder neural network (hereinafter, 'second gradient'), and represents an amount of change in the loss value with respect to an amount of change in the input value of the decoder neural network. That is, since the second gradient is related to a weighted sum for at least one transmitted CSI feedback bit stream, it is common to at least one transmitted CSI feedback bit stream. In addition, the weight is a value multiplied by each CSI feedback bit stream in the weighted sum operation. Based on the second gradient and the at least one weight value, the gradient of the loss value for each CSI feedback bit stream may be determined. In this case, if one CSI feedback bit stream (e.g., primary stream) is received from the UE, that is, if the channel information is reconstructed based on only one CSI feedback bit stream in step S3001, the common gradient is equal to the gradient of the loss value for the corresponding CSI feedback bit stream, and therefore, transmission of the weight may be omitted.

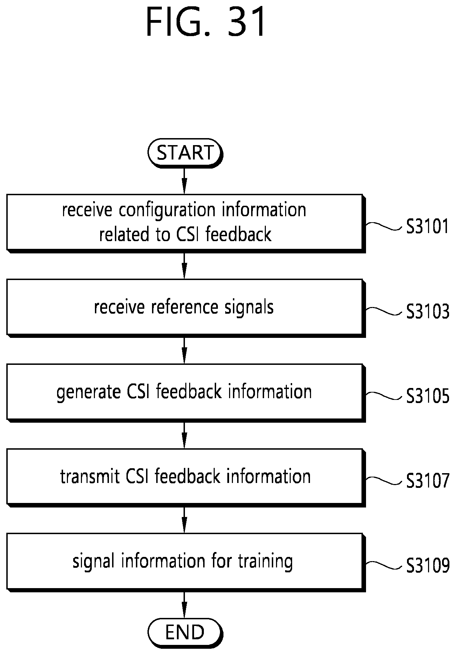

FIG. 31 shows an example of a procedure for performing learning for an encoder of a CSI network based on an embodiment of the present disclosure. FIG. 31 shows the operation method of the UE.

Referring to FIG. 31, in step S3101, the UE receives configuration information related to CSI feedback. The configuration information may include at least one of information related to reference signals transmitted for channel measurement (e.g., resource, sequence, etc.), information related to channel measurement operation, or information related to feedback (e.g., format, resource, the number of feedbacks, period, etc.). In addition, based on various embodiments, the configuration information may further include information representing a transmission rate for CSI feedback.

In step S3103, the UE receives reference signals. The UE receives reference signals based on the configuration information. That is, the UE may receive reference signals based on a sequence indicated by the configuration information through a resource indicated by the configuration information. Through this, the UE may obtain reception values or measurement values for the reference signals.

In step S3105, the UE generates CSI feedback information. Based on various embodiments, the CSI feedback information includes at least one CSI value generated by the encoder neural network of the CSI network. The UE may obtain at least one CSI value by generating an input value of the encoder neural network based on the reception values or the measurement values for the reference signals and performing the inference operation. The at least one CSI value is output from at least one of a plurality of output layers of the encoder neural network. Herein, the output layers may include a final output layer that outputs an independent CSI value that can be independently decoded without combining with other CSI values, and at least one cumulative output layer that outputs a dependent CSI value that requires combining with the independent CSI value for decoding.

In step S3107, the UE transmits CSI feedback information. The UE may transmit the CSI feedback information based on the configuration information received in step S2901. The CSI feedback information may be transmitted through at least one CSI feedback occasion included within the correlation time. If CSI feedback information is transmitted over multiple CSI feedback occasions, the CSI values may be transmitted sequentially via multiple messages. In this case, based on an embodiment, the CSI feedback information may include control information necessary for the decoding operation. For example, the control information may include an indicator representing that the CSI values are transmitted over multiple CSI feedback occasions. Specifically, the control information may include an indicator representing that at least one CSI value to be transmitted in the next CSI feedback occasion can be combined with at least one CSI value transmitted in the current CSI feedback occasion, or an indicator representing that at least one CSI value transmitted in the current CSI feedback occasion can be combined with at least one CSI value transmitted in the previous CSI feedback occasion.

In step S3109, the UE signals information for training to the base station. That is, the UE may transmit at least one message including information for training or receive at least one message. In addition, the UE may perform training on the encoder neural network of the CSI network using at least one of the information for training or the CSI feedback information transmitted in step S3107. Herein, the information for training may include information for training the encoder neural network included in the UE. That is, the UE receives information for training the encoder neural network from the base station. For example, the information for training signaled between the base station and the UE is information used for performing backpropagation, and may include at least one of channel information reconstructed by the base station, channel information estimated by the UE, gradient information of the loss value for the channel, or gradient information of the loss value for the decoder input value.

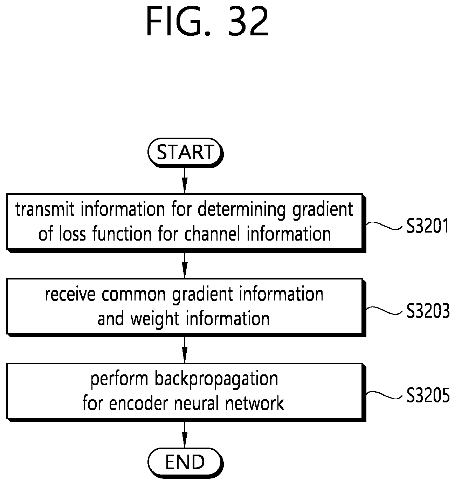

FIG. 32 shows an example of a procedure for processing information for training an encoder of a CSI network based on an embodiment of the present disclosure. FIG. 32 shows the operation method of the UE.

Referring to FIG. 32, in step S3201, the UE transmits information for determining a gradient of a loss value for channel information. The gradient of the loss value for the channel information (hereinafter, 'first gradient') is related to a loss value according to an error between an estimated channel and a reconstructed channel, and represents an amount of change in the loss value with respect to an amount of change in the reconstructed channel value. Based on an embodiment, the UE may determine the first gradient and receive information related to the first gradient (e.g., first gradient value) from the base station. In this case, in order to determine the first gradient in the UE, the UE may receive information related to the reconstructed channel from the base station. Based on another embodiment, the UE may transmit information related to the channel estimated by the UE (e.g., estimated channel value) to the base station. In this case, the first gradient may be calculated at the base station.

In step S3203, the UE receives information related to a common gradient and information related to a weight. The common gradient is a gradient of a loss value for an input value of the decoder neural network (hereinafter, 'second gradient'), which represents an amount of change in the loss value with respect to an amount of change in the input value of the decoder neural network. That is, the second gradient is related to a weighted sum for at least one transmitted CSI feedback bit stream, and thus is common to at least one transmitted CSI feedback bit stream. In addition, the weight is a value multiplied by each CSI feedback bit stream in the weighted sum operation. Based on the second gradient and at least one weight value, the gradient of the loss value for each CSI feedback bit stream may be determined. In this case, if the channel information is reconstructed at the base station based on only one CSI feedback bit stream, the common gradient is equal to the gradient of the loss value for the corresponding CSI feedback bit stream, and therefore, the reception of the weight may be omitted.

In step S3205, the UE performs backpropagation for the encoder neural network. That is, the UE may update the parameter set of the neural network by performing backpropagation from the output layer to the input layer of the encoder neural network using the common gradient and at least one weight. Specifically, the UE may determine the gradients of the loss value for the CSI feedback bit stream (hereinafter, 'third gradients') based on the common gradient and each weight, and perform backpropagation using the third gradients. For example, the UE may determine the third gradients by multiplying each weight by the common gradient. Accordingly, the weights applied to the perceptrons included in the encoder neural network may be updated.

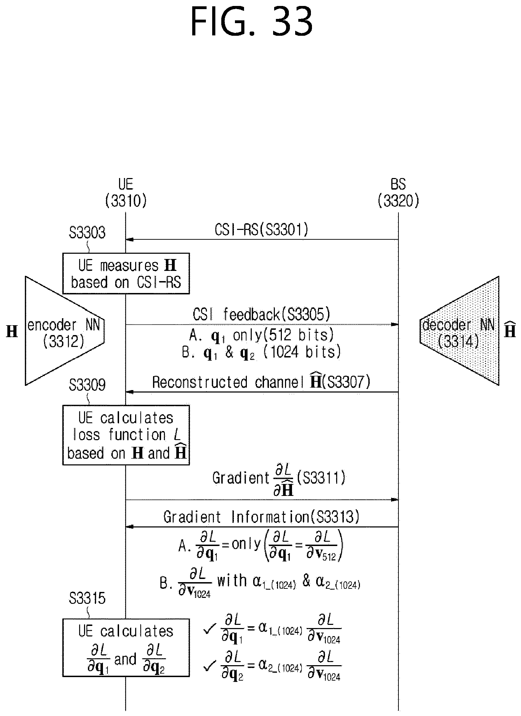

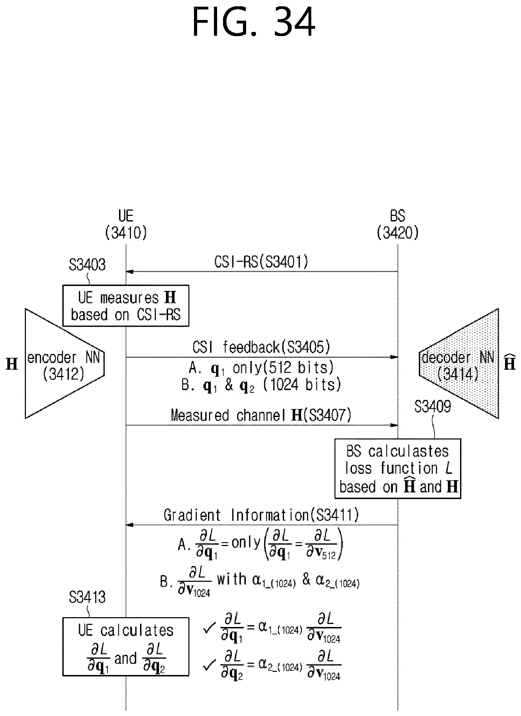

Hereinafter, the present disclosure describes more specific examples of the learning procedure for the aforementioned CSI network with reference to FIGs. 33 and 34. FIGs. 33 and 34 show possible embodiments for a case where there are two types of CSI feedback bit streams transmitted from a UE to a base station through uplink feedback. In FIGs. 33 and 34, if only one CSI feedback bit stream $q_1$ is transmitted from the UE to the base station alone, the number of feedback bits may be 512. If both CSI feedback bit streams $q_1$ and $q_2$ are transmitted from the UE to the base station, the number of feedback bits may be 1024. If two CSI feedback bit streams are combined and then input to the decoder neural network, the CSI reconstruction performance may be better than a case where only one CSI feedback bit stream is input to the decoder neural network alone. In the present disclosure, for FIGs. 33 and 34, the situation in which only one CSI feedback bit stream $q_1$ is transmitted from the UE to the base station is referred to as case A, and the situation in which both CSI feedback bit streams $q_1$ and $q_2$ are transmitted from the UE to the base station is referred to as case B. For convenience of explanation, in the present disclosure, it is assumed that the UE is error-free in measuring and/or estimating the actual channel **H.** That is, the actual channel and the measured channel at the UE are identical to **H,** and a detailed description of the procedure or process for channel measurement and estimation at the UE is omitted.

FIG. 33 shows an example of an online learning procedure using reconstructed channel information based on an embodiment of the present disclosure. FIG. 33 shows online learning in the case in which the reconstructed channel $\hat{H}$ is transmitted from the base station to the UE. The procedure shown in FIG. 33 is only an embodiment, and the online learning does not necessarily have to include all of the illustrated operations, and may include only a part of the procedure described below. For example, the order of signaling may vary, some signaling may be omitted, or additional signaling may be performed other than what is described. In FIG. 33, the UE (3310) includes an encoder neural network (3312) as an encoder-side, and the base station (3320) includes a decoder neural network (3314) as a decoder-side.

Referring to FIG. 33, in step S3301, the base station (3320) transmits a reference signal, for example, a channel state information reference signal (CSI-RS), to the UE (3310). A reference signal such as a CSI-RS may be transmitted from the base station (3320) to the UE (3310) for downlink channel measurement at the UE (3310). Based on various embodiments, other signals that can be used for similar purposes may be transmitted instead of the CSI-RS.

In step S3303, the UE (3310) estimates a channel based on the CSI-RS. In other words, the UE (3310) may measure and/or estimate a downlink channel **H** based on the received reference signal (e.g., CSI-RS). If the measured and/or estimated **H** is input to the encoder neural network (3312) of the CSI network, bit streams corresponding to a CSI feedback signal may be obtained.

In step S3305, the UE (3310) transmits CSI feedback to the base station (320). That is, CSI feedback bit stream(s) may be transmitted from the UE (3310) to the base station (3320). In this case, depending on the case (e.g., case A or case B), one bit stream or multiple bit streams may be transmitted. That is, the number of bit streams transmitted may vary depending on the case (e.g., case A or case B). In this case, if the CSI feedback signal received at the base station (3320) is input to the decoder neural network (3314) of the CSI network, the reconstructed channel $\hat{H}$ may be obtained.

In step S3307, the base station (3320) transmits information related to the reconstructed channel to the UE (3310). In step S3309, the UE (3310) calculates a loss function based on the estimated downlink channel and the reconstructed channel. The UE (3310) may calculate a loss value $L$ based on the actual downlink channel **H** and the reconstructed channel $\hat{H}$. However, since the UE (3310) does not know the reconstructed channel $\hat{H}$, the base station (3320) may transmit information related to the reconstructed channel $\hat{H}$. That is, information related to the reconstructed channel $\hat{H}$ may be transmitted from the base station (3320) to the UE (3310).

In step S3311, the UE (3310) transmits information related to a gradient for a channel to the base station (3320). To this end, the UE (3310) may determine the gradient $\frac{\partial L}{\partial \hat{H}}$ of the loss value $L$ for the reconstructed channel $\hat{H}$ based on the actual downlink channel **H** and the reconstructed channel $\hat{H}$ information received from the base station (3320) as well as the loss value $L$. Thereafter, the gradient $\frac{\partial L}{\partial \hat{H}}$ may be transmitted from the UE (3310) to the base station (3320). Thereafter, the backpropagation procedure for the decoder neural network (3314) in the base station (3320) may be performed from the output of the decoder neural network (3314) to the input. That is, the gradient for each layer of the decoder neural network (3314) may be calculated from the output of the decoder neural network (3314) to the input of the decoder neural network (3314) through the backpropagation.

In step S3313, the base station (3320) transmits information related to a gradient for feedback to the UE (3310). In other words, information related to the gradient for feedback may be transmitted from the base station (3320) to the UE (3310). The information related to the gradient for feedback may vary depending on case A or case B as follows. In case A, the gradient $\frac{\partial L}{\partial q_1}$ of the loss value $L$ for the CSI feedback bit stream $q_1$ may be transmitted from the base station (3320) to the UE (3310). If the input of the decoder neural network (3314) in case A is $v_{512}$, $\frac{\partial L}{\partial q_1}$ may be calculated as $\frac{\partial L}{\partial q_1} = \frac{\partial L}{\partial v_{512}}$ in the base station (3320).

**EP 4 614 845 A1**

In case B, if the input of the decoder neural network (3314) is $v_{1024}$, the gradient $\frac{\partial L}{\partial \mathbf{v}_{1024}}$ of the loss value L for $v_{1024}$ may be transmitted from the base station (3320) to the UE (3310). In order to calculate the input $\mathbf{v}_{1024} = \sum_{s=1}^{2} \alpha_{s\_(1024)} \mathbf{q}_s$ of the decoder neural network (3314), if the weight multiplied by the s-th feedback stream $\mathbf{q}_s$ is $\alpha_{s\_(1024)}$, $\{\alpha_{1\_(1024)},\ \alpha_{2\_(1024)}\}$ together with $\frac{\partial L}{\partial \mathbf{v}_{1024}}$ may be transmitted from the base station (3320) to the UE (3310).

In step S3315, the UE (3310) determines a gradient value for each of at least one CSI feedback stream based on information related to the gradient for feedback. The gradient vectors $\frac{\partial L}{\partial \mathbf{q}_1}$ and $\frac{\partial L}{\partial \mathbf{q}_2}$ of the loss value $L$ for the CSI feedback streams may be calculated based on information related to the gradient received by the UE (3310). That is, the UE (3310) may calculate $\frac{\partial L}{\partial \mathbf{q}_1}$ and $\frac{\partial L}{\partial \mathbf{q}_2}$ based on the received information related to the gradient. In case B, $\frac{\partial L}{\partial \mathbf{q}_1}$ and $\frac{\partial L}{\partial \mathbf{q}_2}$ may be determined as $\frac{\partial L}{\partial \mathbf{q}_1} = \alpha_{1\_(1024)} \frac{\partial L}{\partial \boldsymbol{v}_{1024}}$ and $\frac{\partial L}{\partial \mathbf{q}_2} = \alpha_{2\_(1024)} \frac{\partial L}{\partial \boldsymbol{v}_{1024}}$ .

FIG. 34 shows an example of an online learning procedure using measured channel information based on an embodiment of the present disclosure. FIG. 34 shows online learning when an estimated channel **H** is transmitted from the UE to the base station. The procedure shown in FIG. 34 is only an example, and the online learning does not necessarily have to include all of the illustrated operations, and may include only a part of the procedure described below. For example, the order of signaling may vary, some signaling may be omitted, or additional signaling may be performed other than what is described. In FIG. 34, the UE (3410) includes an encoder neural network (3412) as an encoder-side, and the base station (3420) includes a decoder neural network (3414) as a decoder-side. In FIG. 34, the UE (3410) includes an encoder neural network (3412) as an encoder-side, and the base station (3420) includes a decoder neural network (3414) as a decoder-side.

Referring to FIG. 34, in step S3401, the base station (3420) transmits a reference signal, for example, a CSI-RS, to the UE (3410). A reference signal such as a CSI-RS may be transmitted from the base station (3420) to the UE (3410) for downlink channel measurement at the UE (3410). Based on various embodiments, other signals that can be used for similar purposes may be transmitted instead of the CSI-RS.

In step S3403, the UE (3410) estimates a channel based on the CSI-RS. In other words, the UE (3410) may measure and/or estimate a downlink channel **H** based on the received reference signal (e.g., CSI-RS). If the measured and/or estimated **H** is input to the encoder neural network (3412) of the CSI network, bit streams corresponding to a CSI feedback signal may be obtained.

In step S3405, the UE (3410) transmits CSI feedback to the base station (320). That is, CSI feedback bit stream(s) may be transmitted from the UE (3410) to the base station (3420). In this case, depending on the case (e.g., case A or case B), one bit stream or multiple bit streams may be transmitted. That is, depending on the case (e.g., case A or case B), the number of bit streams transmitted may vary. In this case, if the CSI feedback signal received by the base station (3420) is input to the decoder neural network (3414) of the CSI network, a reconstructed channel **Ĥ** may be obtained.

In step S3407, the UE (3410) transmits information related to a measured channel to the base station (3420). In step S3409, the base station (3420) calculates a loss function based on the measured channel and the reconstructed channel. That is, the base station (3420) may calculate the loss value L based on the actual downlink channel **H** and the reconstructed channel **Ĥ**. However, since the base station (3420) does not know the actual downlink channel **H,** it may receive information related to the measured channel **H** from the UE (3410). That is, information related to the measured channel **H** may be transmitted from the UE (3410) to the base station (3420). Thereafter, the backpropagation procedure for the decoder neural network (3414) may be performed from the output of the decoder neural network (3414) to the input of the decoder neural network (3414) in the base station (3420). That is, the gradient for each layer of the decoder neural network (3414) may be calculated from the output of the decoder neural network (3414) to the input of the decoder neural network (3414) through backpropagation.

In step S3411, the base station (3420) transmits information related to a gradient for feedback to the UE (3410). In other words, information related to the gradient for feedback may be transmitted from the base station (3420) to the UE (3410). The information related to the gradient for feedback may vary depending on case A or case B as follows. For case A, the gradient $\frac{\partial L}{\partial \mathbf{q}_1}$ of the loss value $L$ for the CSI feedback bit stream $\mathbf{q_1}$ may be transmitted from the base station (3420) to the UE (3410). If the input of the decoder neural network (3414) in case A is $v_{512}$, $\frac{\partial L}{\partial \mathbf{q}_1}$ may be calculated as $\frac{\partial L}{\partial \mathbf{q}_1} = \frac{\partial L}{\partial \mathbf{v}_{512}}$ in the base station (3420). For case B, if the input of the decoder neural network (3414) is $v_{1024}$, the gradient $\frac{\partial L}{\partial \mathbf{v}_{1024}}$ of the loss value $L$ for $v_{1024}$ may be transmitted from the base station (3420) to the UE (3410). In order to calculate the input

27

$\mathbf{v}_{1024} = \sum_{s=1}^{2} \alpha_{s\_(1024)} \mathbf{q}_s$ $\mathsf{v}_{1024}$ of the decoder neural network (3414), if the weight multiplied by the *s*-th feedback stream

$\mathbf{q}_s$ is $\alpha_{s\_(1024)}$, $\{\alpha_{1\_(1024)}, \alpha_{2\_(1024)}\}$ together with $\frac{\partial L}{\partial \mathbf{v}_{1024}}$ may be transmitted from the base station (3420) to the UE (3410).

In step S3413, the UE (3410) determines a gradient value for each of at least one CSI feedback stream based on information related to the gradient for feedback. The gradient vectors $\frac{\partial L}{\partial \mathbf{q}_1}$ and $\frac{\partial L}{\partial \mathbf{q}_2}$ of the loss value *L* for the CSI feedback streams may be calculated based on information related to the gradient received by the UE (3410). That is, the UE (3310) may calculate $\frac{\partial L}{\partial \mathbf{q}_1}$ and $\frac{\partial L}{\partial \mathbf{q}_2}$ based on the received information related to the gradient. In case B, $\frac{\partial L}{\partial \mathbf{q}_1}$ and $\frac{\partial L}{\partial \mathbf{q}_2}$ may be determined as $\frac{\partial L}{\partial \mathbf{q}_1} = \alpha_{1\_(1024)} \frac{\partial L}{\partial \mathbf{v}_{1024}}$ and $\frac{\partial L}{\partial \mathbf{q}_2} = \alpha_{2\_(1024)} \frac{\partial L}{\partial \mathbf{v}_{1024}}$.

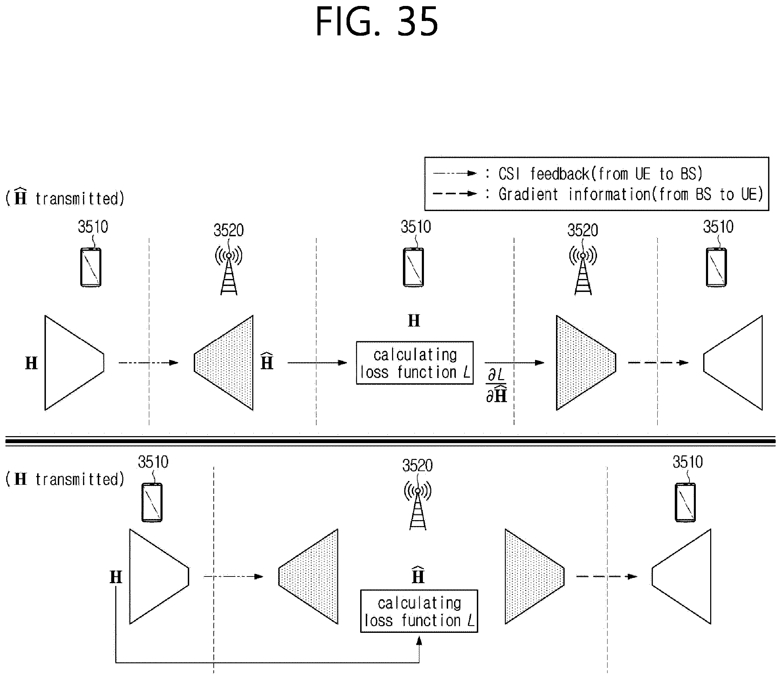

FIG. 35 shows an unfolded representation of an online learning procedure based on an embodiment of the present disclosure. FIG. 35 shows the online learning procedure described with reference to FIGs. 33 and 34 in a different way. Referring to FIG. 35, online learning may be performed while CSI feedback and gradient information are transmitted and received between the UE (3510) and the base station (3520). FIG. 35 is an unfolded representation of the online learning procedure for ease of understanding and is simplified, so the detailed procedure of the online learning is as described with reference to FIGs. 33 and 34.

As in the various embodiments described above, the input of the decoder neural network may be a weighted sum of feedback bit stream(s). In order to generate a weighted sum result $\mathbf{v} = \sum_s \alpha_s \mathbf{q}_s$, the s-th feedback stream $\mathbf{q}_s$ may be multiplied by the weight $\alpha_s$ and then summed. Herein, $\alpha_s$ may be a learnable parameter. Therefore, a layer that receives feedback streams $\{\mathbf{q}_s\}_{s=1,2,\ldots}$ as input and outputs $\mathsf{v} = \sum_s \alpha_s \mathbf{q}_s$, i.e., performs the weighted sum operation, may be included in the decoder-side (e.g., base station) before the decoder neural network. In the present disclosure, the layer that performs the weighted sum operation in the sense that $\{\alpha_s\}_{s=1,2,\ldots}$ is multiplied may be referred to as an 'alpha layer'.

Based on an embodiment, the alpha layer may be included in the decoder-side (e.g., base station). However, in order to further reduce signaling overhead for information related to the gradient in the backpropagation process of online learning, it may be considered to place the alpha layer in the encoder-side (e.g., UE). If the alpha layer is included in the encoder-side (e.g., UE), only the common gradient information $\frac{\partial L}{\partial \mathbf{v}}$ may be sufficiently transmitted from the base station to the UE without the need for the information related to the gradient $\{\alpha_s\}_{s=1,2,\ldots}$ to be transmitted from the base station to the UE.

Therefore, based on an embodiment, it is possible to include the alpha layer on the encoder-side (e.g., UE) while online learning is performed, and to transmit it to the decoder-side (e.g., base station) after training is completed. That is, through migration of the alpha layer, signaling overhead during training can be reduced. Specifically, when online learning is completed, the UE may transmit information for the alpha layer (e.g., parameter set) to the base station. For example, information for the alpha layer may be transmitted through one of various RRC messages, such as capability information.

As in the various embodiments described above, online learning can be performed for the CSI network using accumulable feedback signals. In this case, signaling overhead for online learning can be reduced by utilizing common gradient information. In addition, signaling overhead for online learning can be reduced through migration of the layer that performs the weighted sum operation. In numerical terms, the degree of overhead reduction can be expressed as the amount of information that needs to be transmitted from the base station to the UE for the backpropagation operation can be reduced by 1/{the number of feedback streams}.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

**INDUSTRIAL AVAILABILITY**

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1. A method performed by a user equipment (UE) in a wireless communication system, the method comprising:

    receiving configuration information related to channel state information (CSI) feedback;
    receiving reference signals based on the configuration information;
    generating CSI feedback information based on the reference signals;
    transmitting the CSI feedback information; and
    receiving information for determining a gradient of loss for reconstructed channel information in a base station for each of at least one CSI value included in the CSI feedback information.

2. The method of claim 1, wherein the at least one CSI value includes an independent output value output from an output layer of an encoder neural network that generates the CSI values, and at least one dependent output value output from at least one other output layer included in the encoder neural network.

3. The method of claim 1, wherein the information for determining the gradient includes a common gradient commonly applied to a first CSI value and a second CSI value, a first weight applied to the first CSI value, and a second weight applied to the second CSI value.

4. The method of claim 3, further comprising:

    determining a first individual gradient, which is a gradient of a loss value for the first CSI value, by multiplying the common gradient by the first weight;
    determining a second individual gradient, which is a gradient of a loss value for the second CSI value, by multiplying the common gradient by the second weight; and
    performing training on an encoder neural network for generating the CSI feedback information using the first gradient and the second gradient.

5. The method of claim 1, wherein the information for determining the gradient includes a common gradient commonly applied to an independent output value and at least one dependent output value, a first weight applied to the independent output value, and at least one second weight applied to the at least one dependent output value.

6. The method of claim 1, further comprising:

    receiving reconstructed channel information from the base station;
    determining a loss value based on the reconstructed channel and an estimated channel based on the reference signals; and
    transmitting information related to a gradient of the loss value for the reconstructed channel.

7. The method of claim 1, further comprising:
    transmitting channel information estimated based on the reference signals.

8. The method of claim 1, wherein the gradient is used for training an encoder neural network for generating the CSI feedback information, and
    wherein the training comprises a pre-training phase using only a main stream, and a fine-tuning phase using the main stream and at least one side stream after the pre-training phase.

9. A method performed by a base station in a wireless communication system, the method comprising:

transmitting configuration information related to channel state information (CSI) feedback;
transmitting reference signals based on the configuration information;
receiving CSI feedback information corresponding to the reference signals;
reconstructing channel information based on the CSI feedback information; and
transmitting information for determining a gradient of loss for reconstructed channel information in the base station for each of at least one CSI value included in the CSI feedback information.

10. The method of claim 9, wherein the information for determining the gradient includes a common gradient commonly applied to a first CSI value and a second CSI value, a first weight applied to the first CSI value, and a second weight applied to the second CSI value.

11. The method of claim 9, wherein reconstructing the channel information comprises: generating an input value of a decoder neural network for reconstructing the channel information by multiplying each of CSI values included in the CSI feedback information by a weight and then summing them.

12. The method of claim 11, further comprising:

determining a gradient of a loss value for the reconstructed channel information; and
performing training on the decoder neural network using the gradient.

13. The method of claim 9, further comprising:

transmitting the reconstructed channel information; and
receiving information related to a gradient of the loss value for the reconstructed channel.

14. The method of claim 9, further comprising:

receiving estimated channel information based on the reference signals;
determining a loss function based on the reconstructed channel and the estimated channel; and
determining a gradient of the loss value for the reconstructed channel.

15. A user equipment (UE) in a wireless communication system, comprising:

a transceiver; and
a processor connected to the transceiver,
wherein the processor is configured to:

receive configuration information related to channel state information (CSI) feedback;
receive reference signals based on the configuration information;
generate CSI feedback information based on the reference signals;
transmit the CSI feedback information; and
receive information for determining a gradient of loss for reconstructed channel information in a base station for each of at least one CSI value included in the CSI feedback information.

16. A base station in a wireless communication system, comprising:

a transceiver; and
a processor connected to the transceiver,
wherein the processor is configured to:

transmit configuration information related to channel state information (CSI) feedback;
transmit reference signals based on the configuration information;
receive CSI feedback information corresponding to the reference signals;
reconstruct channel information based on the CSI feedback information; and
transmit information for determining a gradient of loss for reconstructed channel information in the base station for each of at least one CSI value included in the CSI feedback information.

**17.** A communication device comprising:

at least one processor;
at least one computer memory connected to the at least one processor and storing instructions for instructing operations when executed by the at least one processor,
wherein the operations comprise:

receiving configuration information related to channel state information (CSI) feedback;
receiving reference signals based on the configuration information;
generating CSI feedback information based on the reference signals;
transmitting the CSI feedback information; and
receiving information for determining a gradient of loss for reconstructed channel information in a base station for each of at least one CSI value included in the CSI feedback information.

**18.** A non-transitory computer-readable medium storing at least one instruction, comprising:

the at least one instruction executable by a processor,
wherein the at least one instruction controls a device to:

receive configuration information related to channel state information (CSI) feedback;
receive reference signals based on the configuration information;
generate CSI feedback information based on the reference signals;
transmit the CSI feedback information; and
receive information for determining a gradient of loss for reconstructed channel information in a base station for each of at least one CSI value included in the CSI feedback information.

# FIG. 1

# FIG. 2

EP 4 614 845 A1

# FIG. 3

Device(300)

| Communication unit(310)<br>(e.g.,5G Communication unit) | Control unit(320)<br>(e.g.,processor(s)) |
|---|---|
| Communication circuit(312)<br>(e.g.,processor(s),Memory(s)) | Memory unit(330)<br>(e.g.,RAM,storage) |
| Transceiver(s)(314)<br>(e.g.,RF unit(s),antenna(s)) | Additional components(340)<br>(e.g.,power unit/battery, I/O unit,<br>driving unit, computing unit) |

# FIG. 4

440a

Power supply
unit

408

410

420

430

Communication
unit

Control
unit

Memory
unit

440c

440b

I/O unit

Display

Interface
unit

440d

# FIG. 5

Car or autonomous driving car (500)

| |
|---|
| Communication unit (510) |
| Control unit (520) |
| Memory unit (530) |
| Driving unit (540a) |
| Power supply unit (540b) |
| Sensor unit (540c) |
| Autonomous driving unit (540d) |

550

552

Device (200a,200b)

| |
|---|
| Communication unit (512) |
| Control unit (522) |
| Memory unit (532) |
| Driving unit (540a) |
| Power supply unit (540b) |
| Sensor unit (540c) |
| Autonomous driving unit (540d) |

# FIG. 6

# FIG. 7

EP 4 614 845 A1

_700_

codewords

| 710 | 720 | 730 | layers | 740 | 750 | 760 |

```
codewords
   │      710          720          730      layers    740          750          760
   ┌──►┌──────────┐  ┌──────────┐  ┌──────────┐  ┌──────────┐  ┌──────────┐  ┌──────────┐
   │   │ Scrambler│─►│ Modulator│─►│          │─►│          │─►│ Resource │─►│  Signal  │─►
   │   └──────────┘  └──────────┘  │  layer   │  │          │  │  mapper  │  │ Generator│
   │   ┌──────────┐  ┌──────────┐  │  Mapper  │  │ Precoder │  └──────────┘  └──────────┘
   └──►│ Scrambler│─►│ Modulator│─►│          │─►│          │─►│ Resource │─►│  Signal  │─►
       └──────────┘  └──────────┘  └──────────┘  └──────────┘  │  mapper  │  │ Generator│
          710          720                                      └──────────┘  └──────────┘
                                                                   750           760
```

FIG. 8

# FIG. 9

|  | Radio | Microwave | Infrared | Visible | Ultraviolet | X-Ray | Gamma-Ray |
|---|---|---|---|---|---|---|---|

mmWave Terahertz

| Wavelength | $10^8$m | 1m | 10mm | 1mm | 0.1mm | 700nm | 390nm | 10nm | 0.01nm |
|---|---|---|---|---|---|---|---|---|---|

Radiation Type

| Frequency | 3 Hz | 300 MHz | 30 GHz | 300 GHz | 3 THz | 430 THz | 730 THz | 30 PHz | 30 EHz |
|---|---|---|---|---|---|---|---|---|---|

Mega: $10^6$   Giga: $10^9$   Tera: $10^{12}$   Peta: $10^{15}$   Exa: $10^{18}$

# FIG. 10

THz SMALL CELLS

THz
BACKHAUL
LINK

BACKHAUL
COMMUNICATION

THz DATA
CENTRE
NETWORK

VEHICLUAR
COMMUNICATION

THz KIOSK
DOWNLOADING

# FIG. 11

# FIG. 12

input layer     input layer     output layer

input-hidden weight $W^{d \times H}$

hidden-output weight $W^{H \times K}$

# FIG. 13

# FIG. 14

input layer    hidden layer    output layer

input-hidden weight    hidden-output weight

$W^{h \times w \times h \times w}$    $W^{h \times w \times h \times w}$

FIG. 15

# FIG. 16

# FIG. 17

EP 4 614 845 A1

time    input sequence

| | |
|---|---|
| 1 | $(x_1^{(1)}, x_2^{(1)} \cdots, x_d^{(1)})$ |
| 2 | $(x_1^{(2)}, x_2^{(2)} \cdots, x_d^{(2)})$ |
| 3 | $(x_1^{(3)}, x_2^{(3)} \cdots, x_d^{(3)})$ |
| | $\vdots$ |
| t | $(x_1^{(t)}, x_2^{(t)} \cdots, x_d^{(t)})$ |
| | $\vdots$ |
| T | $(x_1^{(T)}, x_2^{(T)} \cdots, x_d^{(T)})$ |

$(s_1^{(1)})(s_2^{(1)}) \cdots (s_k^{(1)})$     $(s_1^{(2)})(s_2^{(2)}) \cdots (s_k^{(2)})$     $(s_1^{(3)})(s_2^{(3)}) \cdots (s_k^{(3)})$

$(+1)(z_1^{(1)})(z_2^{(1)}) \cdots (z_j^{(1)}) \cdots (z_H^{(1)})$   $(+1)(z_1^{(2)})(z_2^{(2)}) \cdots (z_j^{(2)}) \cdots (z_H^{(2)})$   $(+1)(z_1^{(3)})(z_2^{(3)}) \cdots (z_j^{(3)}) \cdots (z_H^{(3)})$ →

$(+1)(x_1^{(1)})(x_2^{(1)}) \cdots (x_i^{(1)}) \cdots (x_d^{(1)})$   $(+1)(x_1^{(2)})(x_2^{(2)}) \cdots (x_i^{(2)}) \cdots (x_d^{(2)})$   $(+1)(x_1^{(3)})(x_2^{(3)}) \cdots (x_i^{(3)}) \cdots (x_d^{(3)})$

time 1      time 2      time 3

# FIG. 18

EP 4 614 845 A1

# FIG. 19

# FIG. 20

2010

2020

2x32x32

| 2, conv5x5, 2 |
|---|

2x32x32

| 2, conv1x9, 2 |
|---|

2x32x32

| 2, conv9x1, 2 |
|---|

ACR
EnBlock

2x32x32

| ACREnBlock |
|---|

2x32x32

| FC |
|---|

2048 n

$\vec{V}$

2048 n

| FC |
|---|

2x32x32

| 2, conv5x5, 2 |
|---|

2x32x32

| 2, conv1x9, 2M |
|---|

2Mx32x32

| 2M, conv7x7, 2M<br>group=M |
|---|

2Mx32x32

| 2M, conv9x1, 2 |
|---|

ACR
DeBlock

2x32x32

| ACRDeBlock |
|---|

$H_a$

# FIG. 21

2110 · 2101 · 2120 · 2191

?

✓ the number of feedback bits:256

2102 2101

‖ ⊕ ‖

✓ the number of feedback bits:512

2192

2103 2102 2101

‖ ⊕ ‖ ⊕ ‖

✓ the number of feedback bits:768

2193

2104 2103 2102 2101

‖ ⊕ ‖ ⊕ ‖ ⊕ ‖

✓ the number of feedback bits:1024

2194

# FIG. 22

# FIG. 23

# FIG. 24

• When the number of transmitted feedback bit streams = 1

2410    2420    2491

2401

✓ the number of feedback bits:512

• When the number of transmitted feedback bit streams = 2

2410    2420    2492

2402  2401

⊕

✓ the number of feedback bits:1024

# FIG. 25

$$\alpha_4 \times \boxed{2504} \oplus \alpha_3 \times \boxed{2503} \oplus \alpha_2 \times \boxed{2502} \oplus \alpha_1 \times \boxed{2501}$$

# FIG. 26

2602

2601

Fine-training
(2620)

Pre-training
(2610)

# FIG. 27a

$$\mathbf{q}_2$$

$$\frac{\partial L}{\partial \mathbf{q}_2}$$

$$\mathbf{q}_1$$

$$\frac{\partial L}{\partial \mathbf{q}_1}$$

# FIG. 27b

# FIG. 27c

$\alpha_{1\_(512)}$ X

FIG. 28a

FIG. 28b

# FIG. 29

```
                    ( START )
                        │
                        ▼
      ┌─────────────────────────────────┐
      │  transmit configuration information  │  ～ S2901
      │      related to CSI feedback        │
      └─────────────────────────────────┘
                        │
                        ▼
      ┌─────────────────────────────────┐
      │      transmit reference signals      │  ～ S2903
      └─────────────────────────────────┘
                        │
                        ▼
      ┌─────────────────────────────────┐
      │    receive CSI feedback information   │  ～ S2905
      └─────────────────────────────────┘
                        │
                        ▼
      ┌─────────────────────────────────┐
      │    reconstruct channel information    │  ～ S2907
      └─────────────────────────────────┘
                        │
                        ▼
      ┌─────────────────────────────────┐
      │     signal information for training   │  ～ S2909
      └─────────────────────────────────┘
                        │
                        ▼
                    ( END )
```

# FIG. 30

START

reconstruct channel information
based on CSI feedback information — S3001

determine gradient of loss function
for channel information — S3003

perform backpropagation
for decoder neural network — S3005

transmit common gradient information
and weight information — S3007

END

# FIG. 31

START

receive configuration information
related to CSI feedback — S3101

receive reference signals — S3103

generate CSI feedback information — S3105

transmit CSI feedback information — S3107

signal information for training — S3109

END

# FIG. 32

START

```
transmit information for determining gradient
of loss function for channel information          ⌇ S3201
```

```
receive common gradient information
and weight information                            ⌇ S3203
```

```
perform backpropagation
for encoder neural network                        ⌇ S3205
```

END

# FIG. 33

# FIG. 34

UE
(3410)

BS
(3420)

CSI-RS(S3401)

S3403

UE measures $\mathbf{H}$ based on CSI-RS

$\mathbf{H}$ | encoder NN (3412)

CSI feedback(S3405)
A. $\mathbf{q}_1$ only(512 bits)
B. $\mathbf{q}_1$ & $\mathbf{q}_2$ (1024 bits)

decoder NN (3414) | $\hat{\mathbf{H}}$

Measured channel $\mathbf{H}$(S3407)

S3409

BS calculastes loss function $L$ based on $\hat{\mathbf{H}}$ and $\mathbf{H}$

Gradient Information(S3411)

A. $\dfrac{\partial L}{\partial \mathbf{q}_1}=$only$\left(\dfrac{\partial L}{\partial \mathbf{q}_1}=\dfrac{\partial L}{\partial \mathbf{v}_{512}}\right)$

B. $\dfrac{\partial L}{\partial \mathbf{v}_{1024}}$ with $\alpha_{1\_(1024)}$ & $\alpha_{2\_(1024)}$

S3413

UE calculates $\dfrac{\partial L}{\partial \mathbf{q}_1}$ and $\dfrac{\partial L}{\partial \mathbf{q}_2}$

✓ $\dfrac{\partial L}{\partial \mathbf{q}_1}=\alpha_{1\_(1024)}\dfrac{\partial L}{\partial \mathbf{v}_{1024}}$

✓ $\dfrac{\partial L}{\partial \mathbf{q}_2}=\alpha_{2\_(1024)}\dfrac{\partial L}{\partial \mathbf{v}_{1024}}$

# FIG. 35

($\widehat{\mathbf{H}}$ transmitted)

Legend:
- ─·─·─▶ : CSI feedback(from UE to BS)
- ─ ─ ─▶ : Gradient information(from BS to UE)

($\mathbf{H}$ transmitted)

## INTERNATIONAL SEARCH REPORT

| International application No. |
| --- |
| **PCT/KR2022/017014** |

### A. CLASSIFICATION OF SUBJECT MATTER

**H04L 1/00**(2006.01)i; **G06N 3/04**(2006.01)i; **H04W 24/08**(2009.01)i; **H04W 24/10**(2009.01)i

According to International Patent Classification (IPC) or to both national classification and IPC

### B. FIELDS SEARCHED

Minimum documentation searched (classification system followed by classification symbols)

H04L 1/00(2006.01); G06N 3/08(2006.01); H04B 7/0413(2017.01); H04B 7/0456(2017.01); H04B 7/06(2006.01); H04L 5/00(2006.01); H04W 4/00(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI, 설정(configuration), 손실(loss), 경사(gradient)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2022-0123226 A (SAMSUNG ELECTRONICS CO., LTD.) 06 September 2022 (2022-09-06)<br>See paragraphs [0007]-[0027]; and claims 1-15. | 1,6-7,9,13-18 |
| A | | 2-5,8,10-12 |
| Y | KR 10-2022-0141810 A (QUALCOMM INCORPORATED) 20 October 2022 (2022-10-20)<br>See paragraphs [0116]-[0124]; and claims 1-16. | 1,6-7,9,13-18 |
| A | KR 10-2021-0106572 A (SAMSUNG ELECTRONICS CO., LTD.) 30 August 2021 (2021-08-30)<br>See paragraphs [0305]-[0326]; and claims 1-15. | 1-18 |
| A | US 2021-0385798 A1 (TELEFONAKTIEBOLAGET LM ERICSSON (PUBL)) 09 December 2021 (2021-12-09)<br>See paragraphs [0206]-[0209]; and claims 1-20. | 1-18 |
| A | WO 2022-174372 A1 (APPLE INC.) 25 August 2022 (2022-08-25)<br>See paragraphs [0020]-[0026]; and claims 1-38. | 1-18 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 July 2023** | **28 July 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 614 845 A1

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| KR | 10-2022-0123226 | A | 06 September 2022 | CN | 114902577 | A | 12 August 2022 |
| | | | | EP | 4046286 | A1 | 24 August 2022 |
| | | | | US | 2021-0211173 | A1 | 08 July 2021 |
| | | | | WO | 2021-137658 | A1 | 08 July 2021 |
| KR | 10-2022-0141810 | A | 20 October 2022 | BR | 112022015942 | A2 | 04 October 2022 |
| | | | | CN | 115136519 | A | 30 September 2022 |
| | | | | EP | 4111608 | A1 | 04 January 2023 |
| | | | | TW | 202135499 | A | 16 September 2021 |
| | | | | US | 2021-0264255 | A1 | 26 August 2021 |
| | | | | WO | 2021-173234 | A1 | 02 September 2021 |
| KR | 10-2021-0106572 | A | 30 August 2021 | CN | 113330691 | A | 31 August 2021 |
| | | | | EP | 3874615 | A1 | 08 September 2021 |
| | | | | JP | 2022-518719 | A | 16 March 2022 |
| | | | | US | 11128354 | B2 | 21 September 2021 |
| | | | | US | 11563468 | B2 | 24 January 2023 |
| | | | | US | 2020-0235790 | A1 | 23 July 2020 |
| | | | | US | 2022-0006494 | A1 | 06 January 2022 |
| | | | | WO | 2020-149706 | A1 | 23 July 2020 |
| US | 2021-0385798 | A1 | 09 December 2021 | AU | 2018-237990 | A1 | 24 October 2019 |
| | | | | AU | 2021-204028 | A1 | 08 July 2021 |
| | | | | BR | 112019019691 | A2 | 14 April 2020 |
| | | | | CN | 110663214 | A | 07 January 2020 |
| | | | | CN | 110663214 | B | 14 October 2022 |
| | | | | EP | 3602933 | A1 | 05 February 2020 |
| | | | | IL | 269438 | A | 28 November 2019 |
| | | | | JP | 2020-516140 | A | 28 May 2020 |
| | | | | JP | 2022-106774 | A | 20 July 2022 |
| | | | | JP | 7112421 | B2 | 03 August 2022 |
| | | | | KR | 10-2019-0126137 | A | 08 November 2019 |
| | | | | KR | 10-2022-0167399 | A | 20 December 2022 |
| | | | | MX | 2019011122 | A | 05 December 2019 |
| | | | | RU | 2020126114 | A | 07 February 2022 |
| | | | | RU | 2729769 | C1 | 12 August 2020 |
| | | | | US | 10484973 | B2 | 19 November 2019 |
| | | | | US | 11109358 | B2 | 31 August 2021 |
| | | | | US | 2019-0141677 | A1 | 09 May 2019 |
| | | | | US | 2020-0045675 | A1 | 06 February 2020 |
| | | | | WO | 2018-173002 | A1 | 27 September 2018 |
| WO | 2022-174372 | A1 | 25 August 2022 | None | | | |